# EUROPÄISCHE PATENTSCHRIFT

(11) **EP 2 516 188 B1**
(45) Veröffentlichungstag und Bekanntmachung des Hinweises auf die Patenterteilung: **17.05.2017**
(21) Anmeldenummer: 10767937.5
(22) Anmeldetag: 06.10.2010
(51) Int. Cl.: B60G 17/052, B60G 17/015

(54) **VENTILEINRICHTUNG FÜR EINE LUFTFEDERUNGSANLAGE**
VALVE DEVICE FOR AN AIR SUSPENSION SYSTEM
DISPOSITIF DE SOUPAPE POUR SYSTÈME D'AMORTISSEUR PNEUMATIQUE

(30) Priorität: 23.12.2009 DE 102009060559; 15.03.2010 DE 102010011432
(43) Veröffentlichungstag der Anmeldung: 31.10.2012
(73) Patentinhaber: WABCO GmbH, 30453 Hannover (DE)
(72) Erfinder: BUCZYLKO, Piotr, PL-55 039 Wroclaw (PL); HLADIK, Marcin, PL-55 095 Mirkow (PL); SCHÖNEBERG, Markus, 30173 Hannover (DE); SIEKER, Armin, 33611 Bielefeld (DE); STENDER, Axel, 31787 Hameln (DE); SZYSZKA, Krzysztof, PL-50 229 Wroclaw (PL); TRAMBAUER, Alexander, 30966 Hemmingen (DE); WAKULSKI, Pawel, PL-54 153 Wroclaw (PL); WEIHE, Ulrich, 30826 Garbsen (DE)
(74) Vertreter: Lauerwald, Jörg
(86) Internationale Anmeldenummer: PCT/EP2010/006087
(87) Internationale Veröffentlichungsnummer: WO 2011/076303

(56) Entgegenhaltungen:
- EP-A1- 1 712 380
- EP-A1- 2 263 892
- EP-A1- 2 263 893
- EP-A2- 1 382 469
- WO-A1-2005/049346
- DE-A1-102004 035 691
- DE-A1-102007 045 012
- DE-C1- 19 944 873

## Beschreibung

Die Erfindung betrifft eine Ventileinrichtung für eine Luftfederungsanlage in einem Fahrzeug gemäß den Merkmalen des Patentanspruchs 1. Die Erfindung betrifft außerdem eine elektronische Steuereinrichtung und ein Verfahren zur Steuerung einer Luftfederungsanlage in einem Fahrzeug mittels einer solchen Ventileinrichtung.

Derartige Ventileinrichtungen dienen zur Steuerung der Druckluftmenge in Luftfederbälgen der Luftfederungsanlage und damit der Einstellung der Niveaulage des Fahrzeugaufbaus gegenüber dem Fahrzeug. Eine Verringerung oder Erhöhung der Druckluftmenge in den Luftfederbälgen wird im Rahmen einer elektronischen Niveauregelung von einer elektronischen Steuereinrichtung automatisch gemäß einem erkannten Regelungsbedarf durchgeführt. Zusätzlich ist es erforderlich, beispielsweise beim Be- und Entladen eines Fahrzeuges, durch manuelle Betätigung die Druckluftmenge in den Luftfederbälgen zu erhöhen oder zu verringern, um das Fahrzeugniveau z. B. an das Niveau einer Laderampe anzupassen. Hierfür war es bisher üblich, separate Ventileinrichtungen für die elektronisch gesteuerte Niveauregelung und für die manuelle, willkürliche Niveauverstellung zu verwenden. Für die manuelle Verstellung sind bisher so genannte Drehschieberventile weit verbreitet. Aus der DE 10 2004 035 691 A1 ist der Vorschlag bekannt, die von der elektronisch gesteuerten Niveauregelung verwendete Ventileinrichtung mit einer manuellen Betätigung zu kombinieren.

Der vorliegenden Erfindung liegt demgegenüber die Aufgabe zugrunde, die Dauerhaltbarkeit einer solchen Ventileinrichtung mit geringem Aufwand zu erhöhen.

Diese Aufgabe wird durch die in den Patentansprüchen 1, 24 und 25 angegebene Erfindung gelöst. Vorteilhafte Weiterbildungen der Erfindung sind in den Unteransprüchen angegeben.

Sofern im Rahmen dieser Anmeldung von Elementen wie z. B. einem Luftfederbalg, einem Druckluftanschluss oder einer Druckluftleitung in der Einzahl gesprochen wird, schließt dies eine Mehrzahl solcher Elemente mit ein, wie z. B. eine Anordnung von Luftfederbälgen, Druckluftanschlüssen oder Druckluftleitungen.

Die erfindungsgemäße Ventileinrichtung weist wenigstens einen mit einem Luftfederbalg der Luftfederungsanlage verbindbaren Balganschluss, einen mit einem Druckluftvorrat verbindbaren Vorratsanschluss und einen mit der Atmosphäre verbindbaren Entlüftungsanschluss auf. Über eine pneumatisch betätigbare Arbeitsventilanordnung kann je nach Betätigung der Ventileinrichtung der Balganschluss wahlweise mit dem Vorratsanschluss oder mit dem Entlüftungsanschluss verbunden oder gegenüber beiden Anschlüssen abgesperrt werden. Bei Verbindung mit dem Vorratsanschluss werden die angeschlossenen Luftfederbälge mit Druckluft befüllt. Hierdurch hebt sich der Fahrzeugaufbau. Bei Verbindung mit dem Entlüftungsanschluss wird Druckluft aus den angeschlossenen Luftfederbälgen abgelassen. Hierdurch senkt sich der Fahrzeugaufbau. Ferner ist der Balganschluss absperrbar. In diesem Zustand sind die Luftfederbälge weder mit dem Vorratsanschluss noch mit dem Entlüftungsanschluss verbunden, sondern davon abgesperrt. In diesem Zustand wird die Druckluftmenge in den Luftfederbälgen gehalten.

Gemäß der Erfindung ist eine pneumatisch betätigbare Arbeitsventilanordnung vorgesehen. Die Arbeitsventilanordnung ist pneumatisch von der elektrischen Betätigungsanordnung und, ebenfalls pneumatisch, von einer über das manuelle Betätigungselement betätigbaren Pneumatikventilanordnung betätigbar. Die Arbeitsventilanordnung kann somit sowohl manuell als auch elektrisch, z. B. von einer elektronischen Steuereinrichtung im Rahmen einer elektronischen Niveauregelung des Fahrzeugaufbaus, gesteuert werden. Die Arbeitsventilanordnung erlaubt große Durchlassquerschnitte zur Befüllung und Entlüftung der Luftfederbälge. Zugleich können die Druckluft-Durchlassquerschnitte der elektrischen Betätigungsanordnung sowie der Pneumatikventilanordnung vergleichsweise klein gewählt werden. Hierdurch ergibt sich ein kostengünstiger Aufbau der erfindungsgemäßen Ventileinrichtung. Zudem können die Betätigungskräfte sowohl für die elektrische Betätigungsanordnung als auch für.die über das mänuelle Betätigungselement betätigbare Pneumatik-Ventilanordnung gering gehalten werden. Dies hat den Vorteil, dass der Verbrauch an elektrischer Energie gering ist. Auch sind die manuell aufzubringenden Betätigungskräfte vergleichsweise gering.

Die erfindungsgemäße Ventileinrichtung erlaubt vorteilhaft eine Bedienung der Luftfederung, d.h. ein Heben oder Senken des Fahrzeugaufbaus, sowohl durch elektronische Steuerung als auch durch manuelle Betätigung. Im Vergleich zu einer rein elektronisch gesteuerten Luftfederungsanlage erlaubt die Erfindung daher vorteilhaft auch dann ein Heben oder Senken des Fahrzeugaufbaus, wenn keine Stromversorgung vorhanden ist, z.B. bei einem von dem Zugfahrzeug abgekoppelten Anhänger, der keine eigene Stromversorgung aufweist.

Vorteilhaft kann das manuelle Betätigungselement zumindest in drei Betriebsstellungen gestellt werden, nämlich eine Heben-Stellung, eine Senken-Stellung sowie eine Neutralstellung. In der Heben-Stellung werden die angeschlossenen Luftfederbälge mit Druckluft befüllt. In der Senken-Stellung wird Druckluft aus den angeschlossenen Luftfederbälgen abgelassen. In der Neutralstellung sind die Luftfederbälge von dem Druckluftvorrat und dem Entlüftungsanschluss getrennt, d. h. die Druckluftmenge in den Luftfederbälgen wird gehalten. In der Neutralstellung erfolgt vorteilhaft die automatische Niveauregelung durch elektronische Steuereinrichtung. Die erfindungsgemäße Ventileinrichtung kommt daher grundsätzlich mit drei Stellungen des manuellen Betätigungselements aus, nämlich Heben, Senken und Neutral. Insbesondere ist keine Unterscheidung zwischen einer Fahrt-Stellung und einer Stopp-Stellung erforderlich, wie bei Ventileinrichtungen im Stand der Technik. Dies erlaubt einen kostengünstigeren Aufbau der erfindungsgemäßen Ventileinrichtung.

Gemäß der Erfindung weist die Arbeitsventilanordnung Balganschluss-seitig wenigstens ein Halteventil und Vorratsanschluss-seitig ein pneumatisch zum Halteventil in Reihe geschaltetes Heben/Senken-Ventil auf. Durch Betätigen des Heben/Senken-Ventils ist das Halteventil wahlweise mit dem Vorratsanschluss oder dem Entlüftungsanschluss verbindbar. Durch Betätigung des Halteventils ist wahlweise ein Druckluftpfad zwischen dem Balganschluss und dem Heben/Senken-Ventil sperrbar oder auf Durchlass schaltbar. Eine solche Ventilanordnung mit einem dem Balganschluss zugeordneten Halteventil erlaubt vorteilhaft eine einfache Erweiterbarkeit der erfindungsgemäßen Ventileinrichtung um eines oder mehrere weitere Halteventile, die erforderlich sind, wenn eine zwei- oder mehrkreisige Luftfederungsanlage zu steuern ist. In diesem Fall ist für jeden Luftfederkreis ein Halteventil vorzusehen. Die Halteventile können vorteilhaft parallel über dasselbe Drucksignal betätigbar sein. Vorteilhaft ist auch für eine solche mehrkreisige Luftfederungsanlage nur ein gemeinsames Heben/Senken-Ventil in der Ventileinrichtung erforderlich. Ein.weiterer Vorteil der beschriebenen Anordnung der Ventile der Arbeitsventilanordnung derart, dass das Heben/Senken-Ventil vorratsseitig angeordnet ist, besteht darin, dass eine unerwünschte Druckluftbefüllung der Luftfederbälge infolge einer Leckage an dem Halteventil oder dem Heben/Senken-Ventil einfacher und wirksamer vermieden werden kann als bei Ventileinrichtungen gemäß dem Stand der Technik. Bei der erfindungsgemäßen Ventileinrichtung würde ein Leckage-bedingter Druckluftstrom von dem Vorratsanschlüss über den mit dem Entlüftungsanschluss verbundenen Druckluftpfad des Heben/Senken-Ventils automatisch in die Atmosphäre abgeführt und damit neutralisiert werden.

Gemäß einer vorteilhaften Weiterbildung der Erfindung kann der Bedienkomfort der Ventileinrichtung bei manueller Bedienung erhöht werden, indem eine Rasteinrichtung vorgesehen ist, mittels der das manuelle Betätigungselement in wenigstens einer Stellung verrastbar ist, z. B. in der Heben-Stellung und/oder der Senken-Stellung. Durch die Verrastbarkeit muss das manuelle Betätigungselement während des Heben- und/oder des Senken-Vorgangs nicht vom Bediener permanent festgehalten werden. Insbesondere bei selbstrückstellend ausgebildeten Ventileinrichtungen, d. h. solchen Ausführungen, bei denen das manuelle Betätigungselement zumindest in einer Betätigungsrichtung gegen die Kraft der Rückstellfeder betätigbar ist, bewirkt die Rasteinrichtung eine Entlastung des Bedieners. Aber auch bei nicht-selbstrückstellend ausgebildeten Ventileinrichtungen wäre ohne die Rasteinrichtung aus Sicherheitsgründen eine manuelle Fixierung des Betätigungselements erforderlich. Daher ist durch die Einrührung der Rasteinrichtung die manuelle Bedienung der Ventileinrichtung für den Bediener angenehmer durchzuführen.

Ein weiterer Vorteil besteht in einer Zeiteinsparung beim Be- und Entladen eines Fahrzeuges. Da ein Senken-Vorgang bei einem schweren Nutzfahrzeug typischerweise bis zu 2 Minuten dauern kann, können mit Hilfe der vorgeschlagenen Ventileinrichtung die mit dem Entladen des Nutzfahrzeugs verbunden Vorgänge nun zügiger und flüssiger durchgeführt werden. So kann bei Verwendung der hiermit vorgeschlagenen Ventileinrichtung der Fahrer während des Senkvorgangs beispielsweise bereits die Plane des Nutzfahrzeugs lösen. Die hiermit einhergehende Arbeitszeiteinsparung führt zu einer nennenswerten Rationalisierung und Kosteneinsparung bei Anwendern der Ventileinrichtung, wie etwa bei Speditionen.

Die Rasteinrichtung kann vorteilhaft so ausgelegt sein, dass die Rasteinwirkung durch die manuelle Bedienkraft überwunden werden, d. h. ein beispielsweise in der Senken-Stellung verrastetes manuelles Betätigungselement kann von dem Bediener manuell mit etwas erhöhtem Kraftaufwand in die Neutralstellung gebracht werden.

Gemäß einer vorteilhaften Weiterbildung der Erfindung ist die Rasteinrichtung entriegelbar. Unter einer Entriegelbarkeit wird in diesem Zusammenhang jede Möglichkeit verstanden, die Rastwirkung der Rasteinrichtung zu überwinden, z. B. durch Vorsehen einer Entriegelungseinrichtung, die die Rastwirkung, d. h. die Rastkraft, der Rasteinrichtung ganz oder teilweise aufhebt oder durch ein Überwinden der Rastwirkung ohne Verringerung der Rastkraft eine Entriegelung aus der verrasteten Stellung bewirkt.

Gemäß einer vorteilhaften Weiterbildung der Erfindung ist die entriegelbare Rasteinrichtung durch Betätigen wenigstens eines Teils der elektrischen Betätigungsanordnung entriegelbar. Eine solche Kopplung der Entriegelbarkeit der Rasteinrichtung mit der an sich für die elektrische Steuerung der Ventileinrichtung vorgesehenen elektrischen Betätigungsanordnung hat den Vorteil, dass für die Entriegelung kein separat von einer elektronischen Steuereinrichtung anzusteuerndes Bauteil erforderlich ist. Dies erlaubt vorteilhaft einerseits einen preisgünstigen Aufbau der Ventileinrichtung. Zudem kann auch die elektronische Steuereinrichtung vereinfacht werden, da kein separater Steuerausgang für die Entriegelung der Rasteinrichtung erforderlich ist.

Ein weiterer Vorteil der Weiterbildung der Erfindung besteht darin, dass eine selbstrückstellend ausgeführte Ventileinrichtung durch ein externes Signal, beispielsweise von einer elektronischen Steuereinrichtung ausgelöst, automatisch in die Neutralstellung stellbar ist, wenn sie zuvor infolge einer Verrastung des manuellen Betätigungselements über die Rasteinrichtung in der Heben-Stellung oder der Senken-Stellung arretiert war.

Hierdurch kann die Sicherheit beim Betrieb eines mit der Ventileinrichtung ausgestatteten Fahrzeugs erhöht werden, da ein versehentliches Vergessen der Rückstellung der Ventileinrichtung in die Neutralstellung beim Beenden des Be- oder Entladevorgangs vermieden werden kann. Vorteilhaft kann beispielsweise durch die elektronische Steuereinrichtung die Geschwindigkeit des Fahrzeugs überwacht werden. Sobald die elektronische Steuereinrichtung erkennt, dass das Fahrzeug nicht mehr im Stillstand ist bzw. eine gewisse Fahrgeschwindigkeit erreicht hat, kann mittels des elektrischen oder pneumatischen Signals die Entriegelungseinrichtung betätigt werden, so dass die Rasteinrichtung entriegelt wird und das manuelle Betätigungselement freigegeben wird. Hierdurch kann die Ventileinrichtung in die Neutralstellung gebracht werden.

Durch eine solche feste Ankopplung der Betätigung der Entriegelungseinrichtung an die Betätigung der elektrischen Betätigungsanordnung kann ein Konflikt zwischen der über das manuelle Betätigungselement und der über die elektrische Betätigungsanordnung ausgewählten Betriebsstellung der Ventileinrichtung vermieden werden. Als Konflikt wird in diesem Zusammenhang verstanden, wenn über das manuelle Betätigungselement eine andere Betriebsstellung ausgewählt wird als über die elektrische Betätigungsanordnung, etwa wenn das eine Element die Heben-Stellung anfordert, während das andere Element die Senken-Stellung anfordert.

Gemäß einer vorteilhaften Weiterbildung der Erfindung ist die Rasteinrichtung durch elektrische oder pneumatische Beaufschlagung der Rasteinrichtung entriegelbar ausgebildet. Beispielsweise kann die Ventileinrichtung eine Entriegelungseinrichtung zur Entriegelung der Rasteinrichtung aufweisen. Die Entriegelungseinrichtung kann vorteilhaft durch ein elektrisches oder pneumatisches Signal betätigbar sein, das auf einen Elektromagneten bzw. einem Druckluftkolben wirkt. Auch eine Kombination als elektropneumatisch ausgebildete Entriegelungseinrichtung ist vorteilhaft.

Gemäß vorteilhafter Weiterbildungen der Erfindung kann die Entriegelungseinrichtung einen Elektromagneten, ein Pneumatikventil oder eine Kombination von beidem aufweisen. Vorteilhaft ist z. B. eine direkt elektromagnetisch wirkende Entriegelungseinrichtung, da hierbei keine zusätzliche Druckluft erforderlich ist und entsprechende druckluftbetätigbare Bauteile entfallen können. Vorteilhaft ist auch eine Variante, bei der die Entriegelungseinrichtung einen mit Druckluft betätigbaren Kolben aufweist. Die Entriegelung kann dann durch ein in der Ventileinrichtung ohnehin vorhandenes Drucksignäl, beispielsweise gesteuert von dem nichtmanuellen Betätigungselement, betätigt werden. Vorteilhaft ist auch eine Beaufschlagung des druckluftbetätigbaren Kolbens der Entriegelungseinrichtung über ein von außen an die Ventileinrichtung herangeführtes Drucksignal. Vorteilhaft ist ferner eine Entriegelungseinrichtung, die einen über einen Elektromagneten betätigbares Pneumatikventil aufweist, das den mit Druckluft betätigbaren Kolben mit Druckluft beaufschlagt.

Gemäß einer vorteilhaften Weiterbildung der Erfindung weist die elektrische Betätigungsanordnung ein Heben/Senken-Magnetventil auf, durch das die Ventileinrichtung derart betätigbar ist, dass der Balganschluss wahlweise mit dem Vorratsanschluss oder dem Entlüftungsanschluss verbunden ist. Die elektrische Betätigungsanordnung weist ferner ein Haltemagnetventil auf, durch das die Ventileinrichtung derart betätigbar ist, dass der Balganschluss wahlweise entweder abgesperrt oder nicht abgesperrt ist. Im nicht abgesperrten Zustand kann der Balganschluss dann mit weiteren Elementen der Ventileinrichtung bzw. mit dem Vorratsanschluss oder dem Entlüftungsanschluss verbunden sein. Vorteilhaft ist durch Betätigung des Heben/Senken-Magnetventils und/oder durch Betätigung des Haltemagnetventils die Rasteinrichtung entriegelbar. Die Entriegelung der Rasteinrichtung kann somit durch Betätigung eines der beiden Magnetventile ausgelöst werden. Selbstverständlich ist auch eine Entriegelung der Rasteinrichtung durch Betätigung beider Magnetventile möglich. Eine solche Kopplung der Entriegelung der Rasteinrichtung mit dem Heben/Senken-Magnetventil bzw. dem Haltemagnetventil hat den Vorteil, dass eine Entriegelung der Rasteinrichtung automatisch immer dann erfolgt, wenn das entsprechende Magnetventil von der elektronischen Steuereinrichtung betätigt ist. Eine Betätigung des Heben/Senken-Magnetventils bzw. des Haltemagnetventils geht einher mit einer Regelungsaktivität der elektronischen Steuereinrichtung. Das Haltemagnetventil kann beispielsweise von der elektronischen Steuereinrichtung auf Durchlass (Balganschluss nicht abgesperrt) geschaltet werden, wenn eine Befüllung oder Entlüftung der angeschlossenen Luftfederbälge gewünscht ist. Das Heben/Senken-Magnetventil wird beispielsweise von der elektronischen Steuereinrichtung bei einer gewünschten Niveauanhebung derart betätigt, dass der Balganschluss mit dem Vorratsanschluss verbunden ist. Über das hierbei am Ausgang des Heben/Senken-Magnetventils erzeugte Drucksignal kann beispielsweise eine Entriegelung der Rasteinrichtung erfolgen.

Gemäß einer vorteilhaften Weiterbildung der Erfindung weist die Ventileinrichtung folgende Merkmale auf:
(a) das Heben/Senken-Magnetventil ist in einem Druckluftpfad zwischen einem Teil der Pneumatikventilanordnung und einem Teil der Arbeitsventilanordnung angeordnet,
(b) ein Teil der Pneumatikventilanordnung ist in einem Druckluftpfad zwischen dem Haltemagnetventil und einem Teil der Arbeitsventilanordnung angeordnet.

Dies erlaubt vorteilhaft eine einfache und zuverlässige Entkopplung der verschiedenen Druckluftpfade für die Steuerung der Luftfederbälge und der Entriegelung der Rasteinrichtung voneinander.

Gemäß einer vorteilhaften Weiterbildung der Erfindung weist die Ventileinrichtung folgende Merkmale auf:
(a) ein Teil der Pneumatikventilanordnung ist in einem Druckluftpfad zwischen dem Heben/Senken-Magnetventil und einem Teil der Arbeitsventilanordnung angeordnet,
(b) ein Teil der Pneumatikventilanordnung ist in einem Druckluftpfad zwischen dem Haltemagnetventil und einem Teil der Arbeitsventilanordnung angeordnet.

Dies erlaubt vorteilhaft eine Verwendung des von dem Heben/Senken-Magnetventil an die Pneumatikventilanordnung ausgegebenen Drucksignals für eine Entriegelung der Rasteinrichtung ohne nachteilige Auswirkungen auf die Funktion der Luftfederungsanlage.

Das Heben/Senken-Magnetventil kann, ebenso wie das Haltemagnetventil, als 3/2-Wege-Magnetventil ausgebildet sein. Alternativ kann statt eines 3/2-Wege-Magnetventils ein Paar von 2/2-Wege-Magnetventilen vorgesehen sein.

Gemäß einer vorteilhaften Weiterbildung der Erfindung ist das manuelle Betätigungselement um eine Drehachse in die Schaltstellungen Heben, Senken und Neutral betätigbar. Bei unbetätigter elektrischer Betätigungsanordnung ist dann in der Schaltstellung Heben der Balganschluss mit dem Vorratsanschluss verbunden, in der Schaltstellung Senken ist der Balganschluss mit dem Entlüftungsanschluss verbunden und in der Schaltstellung Neutral ist der Balganschluss abgesperrt. In der Neutralstellung erfolgt vorteilhaft die automatische Niveauregelung durch elektronische Steuereinrichtung. Vorteilhaft können somit sämtliche Funktionen mit nur drei Schaltstellungen des manuellen Betätigungselements realisiert werden. Es ist insbesondere nicht erforderlich, eine weitere Schaltstellung für den Zustand "Fahrt" vorzusehen. Hierdurch kann die erfindungsgemäße Ventileinrichtung in konstruktiver Sicht einfacher aufgebaut werden als Ventileinrichtungen aus dem Stand der Technik. Eine Betätigung über ein um eine Drehachse betätigbares Betätigungselement hat den weiteren Vorteil, dass bei entsprechender Ausführung der Betätigungsmittel, z.B. von Nocken auf einer Betätigungswelle, zeitgleich mehr als ein Pneumatikventil betätigt werden kant, z.B. mehrere 2/2-Wegeventile. Hierdurch wird ein hoher Bedienungskomfort bei gleichzeitig hoher Sicherheit gegen Fehlbedienungen gewährleistet.

Gemäß einer vorteilhaften Weiterbildung der Erfindung ist das manuelle Betätigungselement in Folge einer Betätigung des Heben/Senken-Magnetventils bzw. des Haltemagnetventils in die Stellung Neutral stellbar. Beispielsweise kann das Betätigungselement durch direkte Beaufschlagung durch einen druckluftgesteuerten Kolben unter Überwindung der Rastkraft der Rasteinrichtung in die Stellung Neutral stellbar ausgebildet sein. Vorteilhaft kann das Betätigungselement auch durch eine Feder in die Stellung Neutral stellbar sein, z. B. durch eine Drehfeder. Gemäß einer vorteilhaften Weiterbildung der Erfindung ist das manuelle Betätigungselement durch eine Rückstellfeder in die Stellung Neutral stellbar.

Das Heben/Senken-Ventil kann als 3/2-Wege-Ventil ausgebildet sein. Alternativ kann statt eines 3/2-Wege-Ventils ein Paar von 2/2-Wege-Ventilen vorgesehen sein. Die Halteventile können vorteilhaft als 2/2-Wege-Ventile ausgebildet sein. Gemäß einer vorteilhaften Weiterbildung der Erfindung ist wenigstens eines der Halteventile bzw. beide Halteventile als Membranventil ausgeführt. Dies erlaubt einen einfachen und kostengünstigen Aufbau der Halteventile mit nur wenigen Bauteilen. Membranventile bieten zudem den Vorteil eines geringen Ansprechdrucks.

Das Halteventil bzw. die Halteventile können über das Haltemagnetventil mit Druckluft von dem Vorratsanschluss der Ventileinrichtung betätigt werden. Die Verwendung von Druckluft von dem Vorratsanschluss hat den Vorteil, dass davon auszugehen ist, dass immer ein ausreichendes Druck-niveau zur Betätigung der Halteventile vorhanden ist. Gemäß einer vorteilhaften Weiterbildung der Erfindung kann der Betätigungsdruck für das Halteventil bzw. die Halteventile von dem Balganschluss abgeleitet werden. Zu diesem Zweck ist ein pneumatischer Betätigungsanschluss des Halteventils und/oder des weiteren Halteventils zur Betätigung dieses Ventils bzw. dieser Ventile mit dem Balganschluss verbindbar. Dies hat den Vorteil, dass bei einer Leckage des Halteventils bzw. der Halteventile, die z.B. alterungsbedingt auftreten kann, ein unbeabsichtigtes Anheben der Niveaulage des Fahrzeugs vermieden werden kann. Insbesondere bei Verwendung von Membranventilen als Halteventile ergibt sich der Vorteil, dass eine Leckage des Haltemagnetventils nicht zu einem unbeabsichtigten Öffnen des Halteventils führt, da an beiden Seiten der Membran des jeweiligen Halteventils derselbe Druck anliegt, nämlich der am Balganschluss vorliegende Druck.

Gemäß einer vorteilhaften Weiterbildung der Erfindung ist ein Detektormittel zur Erkennung einer manuellen Betätigung des manuellen Betätigungselements vorgesehen. Das Detektormittel kann als mechanisch betätigter elektrischer Schaltkontakt, der durch das manuelle Betätigungselement betätigt wird, ausgebildet sein. Vorteilhaft ist auch eine Sensierung der manuellen Betätigung über einen Drucksensor, der an die Pneumatikventilanordnung angeschlossen ist und ein in Folge einer manuellen Betätigung erzeugtes Drucksignal erfasst.

Gemäß einer vorteilhaften Weiterbildung der Erfindung weist die Pneumatikventilanordnung eine Halte-Pneumatikventilanordnung und eine Heben/Senken-Pneumatikventilanordnung auf. Die Ventileinrichtung ist durch die Halte-Pneumatikventilanordnung derart betätigbar, dass der Balganschluss abgesperrt oder nicht abgesperrt ist. Durch die Heben/Senken-Pneumatikventilanordnung ist die Ventileinrichtung derart betätigbar, dass der Balganschluss wahlweise mit dem Vorratsanschluss oder dem Entlüftungsanschluss verbunden ist. Die Ventile der Pneumatikventilanordnung können vorteilhaft als 2/2-Wege-Ventile ausgebildet sein, die jeweils eine Stellung "Geöffnet" und "Geschlossen" aufweisen. Hierbei kann die Halte-Pneumatikventilanordnung aus einem Paar von 2/2-Wege-Ventilen gebildet werden. Ebenso kann die Heben/Senken-Pneumatikventilanordnung aus einem Paar von 2/2-Wege-Ventilen gebildet werden. Vorteilhaft ist auch eine Ausbildung der Heben/Senken-Pneumatikventilanordnung und/oder der Halte-Pneumatikventilanordnung als 3/2-Wege-Ventil. Ein 3/2-Wege-Ventil kann dabei ein Paar von 2/2-Wege-Ventilen ersetzen.

Vorteilhaft können die einzelnen Ventile der Pneumatikventilanordnung identisch oder nahezu identisch aufgebaut sein. Dies erlaubt die Verwendung von Gleichteilen, z.B. zum Aufbau von vier 2/2-Wege-Ventilen. Hierdurch wird die Teilevielfalt der erfindungsgemäßen Ventileinrichtung und damit deren kosten begrenzt.

Gemäß einer vorteilhaften Weiterbildung der Erfindung ist die Rasteinrichtung über einen von einem Druckluftpfad zwischen dem Halte-Magnetventil und der Halte-Pneumatikventilanordnung abgezweigten Druck pneumatisch entriegelbar. Dies erlaubt eine Integration der Rückstellung des Betätigungselements in die Stellung Neutral mit nur geringem Aufwand. Zudem ist eine Auslösung der Entriegelung auf einfache Weise durch Betätigung des Halte-Magnetventils möglich.

Gemäß einer vorteilhaften Weiterbildung der Erfindung ist die Rasteinrichtung über einen von einem Druckluftpfad zwischen dem Heben/Senken-Magnetventil und der Heben/Senken-Pneumatikventilanordnung abgezweigten Druck pneumatisch entriegelbar. Auch dies erlaubt eine Integration der Rückstellung des Betätigungselements in die Stellung Neutral mit nur geringem Aufwand. Zudem ist eine Auslösung der Entriegelung auf einfache Weise durch Betätigung des Heben/Senken-Magnetventils möglich.

Gemäß einer vorteilhaften Weiterbildung der Erfindung ist die Rasteinrichtung infolge fehlenden oder verminderten Drucks am Vorratsanschluss entriegelbar. Hiermit wird eine invertierende Funktion der Entriegelung der Rasteinrichtung realisiert. Eine solche Ausführungsform ist beispielsweise vorteilhaft bei Fahrzeugen mit einer so genannten Höhenbegrenzungseinrichtung einsetzbar. Die Höhenbegrenzungseinrichtung ist eine in der Druckluftanlage des Fahrzeugs vorgesehene Ventileinrichtung, die beim Erhöhen der Niveaulage des Fahrzeugaufbaus infolge einer Luftbefüllung der Luftfederbälge ab Erreichen einer bestimmten Niveaulage die Druckluftzufuhr unterbricht. Die Unterbrechung der Druckluftzufuhr ist in der Regel dadurch vorgesehen, dass der Vorratsanschluss der Ventileinrichtung durch die Ventileinrichtung der Fahrzeughöhenbegrenzung vom Druckluft-vorratsbehälter des Fahrzeuges abgekoppelt wird. An dem Vorratsanschluss der Ventileinrichtung steht dann somit kein Vorratsdruck an. Sofern die Entriegelung der Rasteinrichtung durch Beaufschlagung mit einem am Vorratsanschluss abgeleiteten Druck vorgenommen werden würde, wäre in einem solchen Fall keine automatische Entriegelung der Rasteinrichtung und damit keine Rückstelluhg von der Heben-Stellung in die Neutralstellung möglich. Die Rückstellung müsste dann-manuell erfolgen. Um den Bedienungskomfort auch in solchen Situationen zu verbessern, kann mit der beschriebenen, infolge fehlenden Drucks am Vorratsanschluss entriegelbaren Rasteinrichtung auch bei aufgrund der Fahrzeughöhenbegrenzungseinrichtung abgeschaltetem Vorratsdruck erfolgen,

Gemäß einer vorteilhaften Weiterbildung der Erfindung weist die Rasteinrichtung einen in einem Zylinder verschieblichen, druckluftbeaufschlagbaren Kolben auf. Gemäß einer vorteilhaften Weiterbildung der Erfindung weist die Rasteinrichtung eine erste Druckluftkammer auf der einen Kolbenseite und eine zweite Druckluftkammer auf der der ersten Druckluftkammer gegenüberliegenden Kolbenseite auf. Hierdurch weist die Rasteinrichtüng zwei Druckluftanschlüsse auf, wobei der Kolben durch zwei über die zwei Druckluftanschlüsse herangeführten Drücke bzw. durch einen Differenzdruck aus beiden Drücken steuerbar ist. Auf diese Weise kann die Funktion der Rasteinrichtung von zwei unabhängigen Drucksignalen kontrolliert werden. Eine solche Ausführungsform ist beispielsweise vorteilhaft bei Fahrzeugen mit der zuvor genannten Höhenbegrenzungseinrichtung einsetzbar. Zur Verbesserung des Bedienungskomforts kann mit dem beschriebenen, durch zwei Drucksignale kontrollierbaren Kolben eine automatische Entriegelung der Rasteinrichtung auch bei aufgrund der Fahrzeughöhenbegrenzungseinrichtung abgeschaltetem Vorratsdruck erfolgen. Hierfür kann ein Druckanschluss des Zylinders der Rasteinrichtung mit dem Vorratsanschluss der Ventileinrichtung verbunden werden, der andere Druckanschluss kann beispielsweise mit dem Heben/Senken-Magnetventil verbunden werden. Bei fehlendem Druck am Vorratsanschluss ist der Kolben dann Druck-unbeaufschlagt, so dass sich dann die Rasteinrichtung in Folge einer Federkraft selbsttätig entriegeln kann.

Gemäß einer vorteilhaften Weiterbildung der Erfindung weist die Rasteinrichtung ein gegenüber dem Kolben verschieblich und gefedert angeordnetes Rastbetätigungselement auf, über dass das manuelle Betätigungselement mit wenigstens einer Stellung verrastbar ist. Diese Weiterbildung erlaubt eine Ausführung der Rasteinrichtung derart, dass bei Drucklosigkeit am Vorratsanschluss der Ventileinrichtung, z.B. ausgelöst durch die Fahrzeughöhenbegrenzungseinrichtung, das gefedert angeordnete Rastbetätigungselement eine Rückstellung des Kolbens derart bewirkt, dass die Rasteinrichtung entriegelt ist.

Eine vorteilhafte Weiterbildung der Erfindung betrifft eine elektronische Steuereinrichtung mit einem Mikroprozessor und einem Programmspeicher, in dem ein Steuerprogramm gespeichert ist, wobei die elektronische Steuereinrichtung zur Steuerung einer Luftfederungsanlage in einem Fahrzeug mittels einer Ventileinrichtung nach wenigstens einem der vorhergehenden Ansprüche eingerichtet ist. Dies hat den Vorteil, dass die Überwachung von Auslösekriterien für die Entriegelung der Rasteinrichtung und die Auslösung der Entriegelung durch eine Software-Erweiterung in dem Steuerprogramm einer elektronischen Steuereinrichtung vorgenommen werden kann, die für die Steuerung der Niveauregelung ohnehin vorzusehen ist.

Eine vorteilhafte Weiterbildung der Erfindung betrifft ein Verfahren zur Steuerung einer Luftfederungsanlage in einem Fahrzeug mittels einer Ventileinrichtung der zuvor beschriebenen Art, wobei das Verfahren wenigstens folgende Schritte aufweist:
a) Es wird von einer elektronischen Steuereinrichtung laufend überwacht, ob sich das Fahrzeug im Fahrtzustand befindet,
b) bei Erkennung des Fahrtzustandes betätigt die elektronische Steuereinrichtung wenigstens einen Teil der elektrischen Betätigungsanordnung der Ventileinrichtung zur Entriegelung der Rasteinrichtung.

Der Fahrtzustand, d.h. der Zustand eines in Fahrt befindlichen Fahrzeuges, kann von der elektronischen Steuereinrichtung z.B. durch Auswertung von Drehgeschwindigkeitssignalen, die von Sensoren eines Antiblockiersystems erzeugt werden, ermittelt werden.

Die Erfindung wird nachfolgend anhand von Ausführungsbeispielen unter Verwendung von Zeichnungen weiter erläutert.

Es zeigen:
- Fig. 1: eine zweikreisige Luftfederungsanlage in schematischer Darstellung unter Verwendung der erfindungsgemäßen Ventileinrichtung und
- Fig. 2: eine Ausführungsform der erfindurigsgemäßen Ventileinrichtung und
- Fig. 3: eine Detaildarstellung der Rasteinrichtung und
- Fig. 4: eine weitere Ausführungsform der Rasteinrichtung und
- Fig. 5, 6, 7: weitere Ausführungsformen der erfindungsgemäßen Ventileinrichtung und
- Fig. 8: eine weitere Ausführungsform der Rasteinrichtung und
- Fig. 9: ein Membranventil in schematischer Darstellung.

In den Figuren werden gleiche Bezugszeichen für einander entsprechende Elemente verwendet.

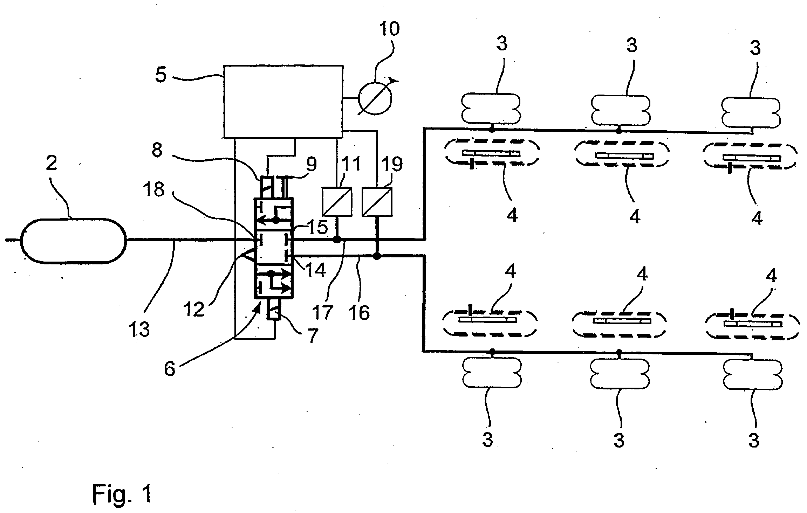

Fig. 1 zeigt in schematischer Darstellung den Aufbau einer zweikreisigen Luftfederungsanlage in einem dreiachsigen Fahrzeug. Das Fahrzeug weist Räder 4 auf, die paarweise an jeweiligen Fahrzeugachsen angeordnet sind. Der Fahrzeugaufbau ist über Luftfederbälge 3 gegenüber den Fahrzeugachsen gefedert. Die Luftfederbälge 3 sind jeweils in der Nähe der Radaufhängung der Räder 4 angeordnet. Über die Luftfederbälge 3 kann die Niveaulage des Fahrzeugsaufbaus gegenüber den Rädern 4 in bestimmten Grenzen verändert werden. Die Luftfederungsanlage gemäß Fig. 1 ist zweikreisig ausgebildet, d. h. sie weist einen Druckluftkreis für die rechte Fahrzeugseite und einen weiteren Druckluftkreis für die linke Fahrzeugseite auf. Die Druckluftkreise weisen je drei Luftfederbälge 3 auf, die an jeweilige pneumatische Leitungen 16, 17 angeschlossen sind. Die Leitungen 16, 17 sind mit pneumatischen Anschlüssen 14, 15 einer Ventileinrichtung 6 der erfindungsgemäßen Art verbunden. Ein pneumatischer Anschluss 18 der Ventileinrichtung 6 ist wiederum über eine pneumatische Leitung 13 mit einem Druckluftvorrat verbunden. Der Druckluftvorrat ist im Ausführungsbeispiel der Fig. 1 als Druckluft-Vorratsbehälter 2 dargestellt.

Bei Fahrzeugen mit eigener Druckluftversorgung ist der Druckluft-Vorratsbehälter 2 üblicherweise noch mit der Druckluftversorgungsanlage, d. h. mit einem Kompressor, einem Lufttrockner und einem Mehrkreisschutzventil, verbunden.

Die pneumatischen Anschlüsse 14, 15 sind die Balganschlüsse der Ventileinrichtung 6. Der pneumatische Anschluss 18 ist der Vorratsanschluss der Ventileinrichtung 6. Die Ventileinrichtung 6 weist ferner einen Entlüftungsanschluss 12 auf, über den Druckluft in die Atmosphäre entlassen werden kann.

Die Ausführung der Luftfederungsanlage als zweikreisige Anlage hat den Vorteil, dass die Wankstabilität des Fahrzeugs erhöht werden kann, da Ausgleichsströmungen der Druckluft zwischen der linken und der rechten Fahrzeugseite verhindert werden.

Die Ventileinrichtung 6 ist durch elektrische Betätigungssignale über Elektromagnete 7, 8 betätigbar. Zusätzlich ist die Ventileinrichtung 6 über ein manuelles Betätigungselement 9 betätigbar. Die Elektromagnete 7, 8 sind über elektrische Leitungen mit einer elektronischen Steuereinrichtung 5 verbunden.

Die elektronische Steuereinrichtung 5 dient zur automatischen, elektronisch gesteuerten Niveauregelung des Fahrzeugaufbaus. Zu diesem Zweck ist an die elektronische Steuereinrichtung 5 ein Wegsensor 10 angeschlossen, der üblicherweise am Fahrzeugrahmen, der Teil des Fahrzeugaufbaus ist, montiert ist und über einen mechanischen Sensierarm den jeweiligen Abstand zum Fahrwerk, d. h. zu den Achsen des Fahrzeugs, sensiert. Des Weiteren sind zwei Drucksensoren 11, 19 mit der elektronischen Steuereinrichtung 5 verbunden. Die Drucksensoren 11, 19 sind pneumatisch mit den Leitungen 16, 17 verbunden und sensieren den Druck in den zwei Druckluftkreisen der Luftfederungsanlage. Die Sensoren 10, 11, 19 geben die sensierten Informationen als elektrische Signale an die elektronische Steuereinrichtung 5 ab, die diese Signale verarbeitet und hieraus gemäß vorgegebenen Algorithmen eines Steuerprogramms entsprechende Ansteuersignale für die für die Elektromagnete 7, 8 erzeugt.

Es ist auch möglich, statt zweier Drucksensoren 11, 19 nur einen der Drucksensoren 11 oder 19 einzusetzen. Sofern, wie nachfolgend noch näher erläutert, die Luftfederungsanlage eine so genannte pseudo-zweikreisige Ausführung hat, in der die Druckluftkreise über eine Ausgleichs-Drosselbohrung 20, z.B. in der Größe 0,8 mm, verbunden sind, wird durch die Ausgleichs-Drosselbohrung 20 ein gewisser Druckausgleich zwischen den Druckluftkreisen sichergestellt, so dass die Sensierung über einen Drucksensor in der Praxis ausreichend ist.

Sofern die Luftfederungsanlage zweikreisig ohne Drosselverbindung ausgeführt ist, kann eine Drucksensierung mittels nur eines Drucksensors dann z.B. über ein Umschaltventil wahlweise mit der Druckluftleitung 16 oder Druckluftleitung 17 verbunden werden. Alternativ ist es möglich, einen der Drucksensoren 11 oder 19 fest mit einer der Druckluftleitungen 16 oder 17 zu verbinden und hierüber den Druck in einem Druckluftkreis zu messen. Der Druck in dem anderen Druckluftkreis, der nicht sensiert wird, kann beispielsweise rechnerisch in der elektronischen Steuereinrichtung 5 durch Auswertung der Drehgeschwindigkeiten der Räder 4 bei einer Bremsung ermittelt werden. Über die Auswertung des Radschlupfs bei einer Bremsung kann auf die Beladung derjenigen Fahrzeugseite geschlossen werden, deren Druckluftkreis nicht sensiert ist.

Die elektronische Steuereinrichtung 5 kann beispielsweise ein ABS- (Anti-Blockier-System) oder EBS- (Elektronisch gesteuertes Bremssystem) Steuergerät sein. Das Steuergerät 5 ist dann über elektrische Leitungen mit Drehgeschwindigkeitssensoren verbunden, die in der Nähe der Räder 4 angeordnet sind und die Drehgeschwindigkeiten der Räder 4 erfassen. Das Steuergerät 5 wertet diese Drehgeschwindigkeitssignale aus.

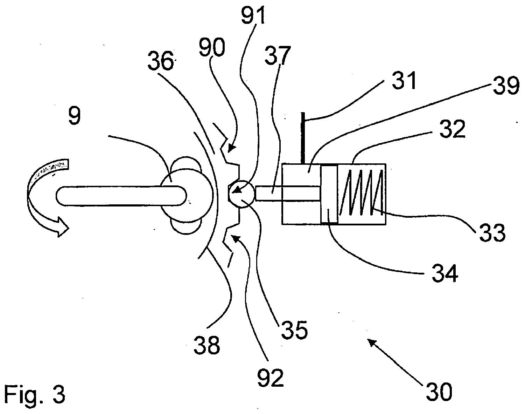

Die Ventileinrichtung 6 dient einerseits zur Regelung und Konstanthaltung des Fahrzeugniveaus im Rahmen der elektronischen Niveauregelung durch die elektronische Steuereinrichtung 5. Die Ventileinrichtung 6 dient außerdem einer manuellen Veränderung der Niveaulage des Fahrzeugs, die von der durch die elektronische Steuereinrichtung 5 vorgegebenen Soll-Niveaulage abweicht. Eine solche manuelle Veränderung ist beispielsweise beim Be- oder Entladen des Fahrzeuges an einer Laderampe erforderlich. Für die manuelle Veränderung der Niveaulage ist an der Ventileinrichtung 6 ein Betätigungselement 9 vorgesehen. Das Betätigungselement 9 kann beispielsweise als Betätigungshebel einer Ventileinrichtung mit Drehbetätigung gemäß Fig. 3 ausgestaltet sein.

Das Betätigungselement 9 kann manuell in die Stellungen Heben, Senken oder Neutral gestellt werden. Je nach Ausführungsart können bestimmte weitere Stellungen vorgesehen sein. In der Stellung Heben wird Druck aus dem Druckluft-Vorratsbehälter 2 in die Luftfederbälge 3 geleitet. In der Stellung Senken wird Luft aus den Luftfederbälgen 3 über den Entlüftungsanschluss 12 in die Atmosphäre entlassen. In der Stellung Neutral erfolgt keine Änderung der Druckluftmenge in den Luftfederbälgen 3.

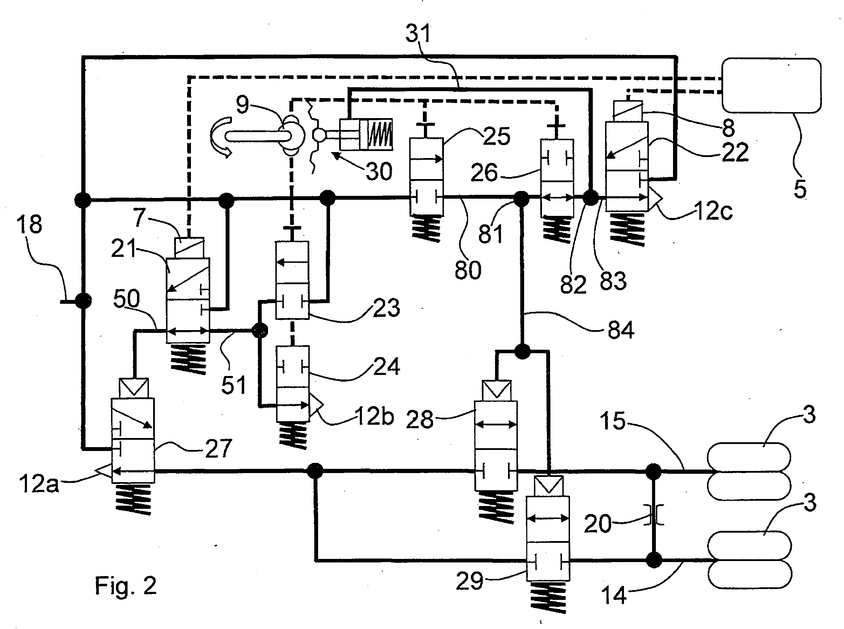

Die Fig. 2 zeigt den Aufbau der Ventileinrichtung 6 in detaillierter Form als pneumatisch/elektrisches Schaltbild. Pneumatische Leitungen sind in den Fig. 2 bis 5 mit durchgezogenen Linien dargestellt, elektrische Leitungen zur besseren Unterscheidung mit punktierten Linien. Gestrichelte Linien symbolisieren eine mechanische Betätigung. Zentrales Element der Ventileinrichtung 6 ist eine Arbeitsventileinrichtung 27, 28, 29, die ein Heben/- Senken-Ventil 27, ein Halteventil 28 und ein weiteres Halteventil 29 aufweist. Das Heben/Senken-Ventil 27 und die Halteventile 28, 29 sind pneumatisch betätigbar. Das Heben/Senken-Ventil ist als 3/2-Wegeventil ausgebildet, die Halteventile 28, 29 jeweils als 2/2-Wegeventile. Das Heben/Senken-Ventil 27 ist an den Vorratsanschluss 18 angeschlossen. An das Heben/Senken-Ventil 27 ist das Halteventil 28 sowie, über einen dazu parallelen Druckluftpfad, das weitere Halteventil 29 angeschlossen. Das Halteventil 28 führt zu dem Balganschluss 15, das weitere Halteventil 29 zu dem weiteren Balganschluss 14. Zusätzlich ist zwischen den Balganschlüssen 14, 15 in der Ventileinrichtung 6 eine Querdrossel 20 vorgesehen, über die die beiden Luftfederkreise gedrosselt miteinander verbunden sind. Die Querdrossel erlaubt eine gewisse Ausgleichsströmung zwischen den Luftfederkreisen, ohne die Wankstabilität des Fahrzeugs negativ zu beeinflussen. Die Querdrossel 20 kann z.B. in Form der erwähnten Ausgleichs-Drosselbohrung realisiert sein.

Das Heben/Senken-Ventil 27 weist zudem eine Entlüftung 12a auf, die mit dem Entlüftungsanschluss 12 der Ventileinrichtung 6 verbunden ist.

An einem pneumatischen Steueranschluss des Heben/Senken-Ventils 27 ist ein Heben/Senken-Magnetventil 7, 21 angeschlossen. Das Heben/Senken-Magnetventil 7, 21 weist ein über den Elektromagneten 7 betätigbares 3/2-Wegeventil 21 auf. Weitere Druckluftanschlüsse des Heben/Senken-Magnetventils 7, 21 sind mit dem Vorratsanschluss 18 und mit einer Heben/Senken-Pneumatikventilanordnung 23, 24 verbunden. Durch entsprechende elektrische Beaufschlagung des Elektromagneten 7 kann über das Heben/Senken-Magnetventil 7, 21 wahlweise der Vorratsdruck oder der von der Heben/Senken-Pneumatikventilanordnung 23, 24 ausgegebene Druck auf den pneumatischen Steueranschluss des Heben/Senken-Ventils 27 gegeben werden.

Die Heben/Senken-Pneumatikventilanordnung 23, 24 weist ein als 2/2-Wegeventil ausgebildetes Einlassventil 23 und ein als 2/2-Wegeventil ausgebildetes Auslassventil 24 auf. Das Auslassventil 24 weist eine Entlüftung 12b auf, die mit dem Entlüftungsanschluss 12 der Ventileinrichtung 6 verbunden ist. Über das Auslassventil 24 ist der zu dem Heben/Senken-Magnetventil 7, 21 führende Druckluftpfad entlüftbar. Das Einlassventil 23 ist mit dem Vorratsanschluss 18 verbunden. Über das Einlassventil 23 ist der zu dem Heben/Senken-Magnetventil 7, 21 führende Druckluftpfad mit Vorratsdruck beaufschlagbar.

Die pneumatischen Steuereingänge der Halteventile 28, 29 sind mit einer Halte-Pneumatikventilanordnung 25, 26 verbunden. Die Halte-Pneumatikventilanordnung weist ein als 2/2-Wegeventil ausgebildetes weiteres Einlassventil 25 und ein als 2/2-Wegeventil ausgebildetes weiteres Auslassventil 26 auf. Das weitere Einlassventil 25 ist mit dem weiteren Auslassventil 26 über einen Druckluftpfad 80 verbunden. Das weitere Auslassventil 26 ist mit dem Halte-Magnetventil 8, 22 über einen Druckluftpfad 83 verbunden. Über das weitere Einlassventil 25 ist der pneumatische Steuereingang der Halteventile 28, 29 mit dem Vorratsanschluss 18 verbindbar. Über das weitere Auslassventil 26 ist der pneumatische Steuereingang der Halteventile 28, 29 mit einem Halte-Magnetventil 8, 22 verbindbar. Die Halteventile 28, 29 sind über einen Druckluftpfad 84 mit dem Druckluftpfad 80 an einem Verbindungspunkt 81 verbunden.

Das Halte-Magnetventil 8, 22 weist ein 3/2-Wegeventil 22 auf, das über den Elektromagneten 8 betätigbar ist. Je nach Betätigung des Elektromagneten 8 verbindet das Halte-Magnetventil 8, 22 seinen mit dem weiteren Auslassventil 26 verbundenen Anschluss wahlweise mit dem Vorratsanschluss 18 oder über eine Entlüftung 12c mit dem Entlüftungsanschluss 12 der Ventileinrichtung 6.

Die Ventile 23, 24, 25, 26 der Pneumatikventilanordnung sind als mechanisch betätigbare Ventile ausgebildet, die über ein manuelles Betätigungselement 9 von einem Bediener betätigbar sind. Bei einem Stellen des manuellen Betätigungselements 9 in die Stellung Senken werden die Ventile 25, 26 mechanisch betätigt, z.B. durch Nocken auf einer mit dem Betätigungselement 9 drehbaren Nockenwelle. Hierdurch werden die Halteventile 28, 29 auf Durchlass gestellt. Der pneumatische Steueranschluss des Heben/Senken-Ventils 27 bleibt über das Auslassventil 24 entlüftet, so dass die Luftfederbälge über das Heben/Senken-Ventil 27 entlüftet werden. Bei einem Stellen des manuellen Betätigungselements 9 in die Stellung Heben werden sämtliche Ventile 23, 24, 25, 26 der Pneumatikventilanordnung mechanisch betätigt. Hierdurch werden die Halteventile 28, 29 auf Durchlass gestellt. Der pneumatische Steueranschluss des Heben/Senken-Ventils 27 wird über das Einlassventil 23 mit Vorratsdruck beaufschlagt. Hierdurch verbindet das Heben/Senken-Ventil 27 die Luftfederbälge mit dem Vorratsanschluss 18. In der Stellung Neutral sind sämtliche Ventile 23, 24, 25, 26 der Pneumatikventilanordnung unbetätigt und damit in der in Fig. 2 dargestellten Schaltstellung. Hierdurch sind die Halteventile 28, 29 in der Sperrstellung.

Die Fig. 2 zeigt außerdem eine Rasteinrichtung 30 in schematischer Darstellung. Über die Rasteinrichtung 30 ist das manuelle Betätigungselement 9 in den Stellungen Heben, Senken und Neutral verrastbar. Infolge der Verrastung ist das Betätigungselement 9 mechanisch fixiert, wobei die Fixierung aber durch eine manuelle Betätigung mit erhöhter Betätigungskraft überwunden werden kann. Die Fixierung erlaubt eine sichere Einstellung der jeweiligen Betätigungsstellung Heben, Senken oder Neutral, da eine Bedienperson durch die Rasteinrichtung eine haptische Rückmeldung über das Erreichen einer der drei Stellungen erhält. Die Verriegelungseinrichtung 30 weist einen Druckluft-beaufschlagbaren Kolben auf. Eine Druckluftkammer zur Druckluftbeaufschlagung des Kolbens ist über einen Druckluftpfad 31 an einem Verbindungspunkt 82 mit dem Druckluftpfad 83 und hierüber mit dem Halte-Magnetventil 8, 22 verbunden. Die Rasteinrichtung 30 ist somit über einen an dem Verbindungspunkt 82, der sich zwischen dem Halte-Magnetventil 8, 22 und dem weiteren Auslassventil 26 befindet, abgezweigten Druck entriegelbar. Bei einer Erregung des Elektromagneten 8 schaltet das Halte-Magnetventil 8, 22 in eine Stellung, in der der mit der Rasteinrichtung 30 verbundene Druckluftpfad 31 mit dem Vorratsanschluss 18 verbunden ist. Hierdurch wird der Kolben mit Vorratsdruck beaufschlagt, was zu einer Entriegelung der Rasteinrichtung 30 führt.

Bei einer Niveauregelung, die durch das Steuergerät 5 durchgeführt wird, erfolgt eine Betätigung des Elektromagneten 8 durch das Steuergerät 5. Hierdurch wird die Rasteinrichtung 30 entriegelt, so dass das manuelle Betätigungselement 9 infolge der Rückstellkraft einer Rückstellfeder in die Stellung Neutral gebracht wird. Durch das Stellen des Betätigungselements 9 in die Stellung Neutral ist das weitere Auslassventil 26 unbetätigt, so dass der Druckluftpfad von dem Halte-Magnetventil 8, 22 zu den pneumatischen Steueranschlüssen der Halteventile 28, 29 freigegeben ist. Hierdurch werden die pneumatischen Steueranschlüsse der Halteventile 28, 29 mit Vorratsdruck beaufschlagt, wodurch die Balganschlüsse 14, 15 mit dem Heben/Senken-Ventil 27 verbunden werden. Durch entsprechende elektrische Betätigung des Heben/Senken-Magnetventils 7, 21 kann das Steuergerät 5 nun den pneumatischen Steuereingang des Heben/Senken-Ventils 27 mit Vorratsdruck beaufschlagen oder über das Auslassventil 24 entlüften. Hierdurch kann im Rahmen einer elektronischen Niveauregelung wahlweise Druckluft von dem Vorratsanschluss 18 über das Heben/Senken-Ventil 27 in die Luftfederbälge 3 geführt werden oder Luft aus den Luftfederbälgen 3 über den Entlüftungsanschluss in die Atmosphäre abgeführt werden.

Die Fig. 3 zeigt eine vorteilhafte Ausführungsform der Rasteinrichtung 30 in Verbindung mit dem manuellen Betätigungselement 9. Das manuelle Betätigungselement 9 weist einen Betätigungshebel und eine drehfest damit verbundene Welle 36 auf. Die Welle 36 weist drei Rastnuten 90, 91, 92 auf, und zwar für die Stellungen Heben, Senken und Neutral. Die Rastnut 90 ist für die Stellung Heben vorgesehen, die Rastnut 91 für die Stellung Neutral und die Rastnut 92 für die Stellung Senken. Das manuelle Betätigungselement 9 ist ferner über eine schematisch dargestellte Rückstellfeder 38, die zur Rückstellung des manuellen Betätigungselements 9 in die Stellung Neutral dient, verbunden. Die Rückstellfeder 38 kann beispielsweise gemäß der Patentanmeldung DE 10 2007 045 012 A1 ausgeführt sein.

Die Rasteinrichtung 30 weist ferner ein über eine Feder 33 eines pneumatischen Stellzylinders 32 beaufschlagtes Rastelement 35, z.B. in Form einer Rastrolle oder Rastkugel, auf. Mittels des federbeaufschlagten Rastelements 35 lässt sich das Betätigungselement 9 derart rastieren, dass es in der Stellung Heben oder Senken trotz der Rückstellkraft der Rückstellfeder 38 gehalten wird. Die Rastkraft des Rastelements 35 ist vorteilhaft derart ausgelegt, dass sie das Betätigungselement 9 gegen die Rückstellkraft der Rückstellfeder 38 halten kann, jedoch mittels Handkraft am Betätigungselement 9 überwunden werden kann.

Das Rastelement 35 wird von einer Kolbenstange 37, die mit einem Druckluftkolben 34 verbunden ist, gegen die Welle 36 beaufschlagt. Der Druckluftkolben 34 ist an seiner gegenüberliegenden Seite über eine Feder 33 gegenüber dem Gehäuse des Stellzylinders 32 gefedert. Über die Druckluftleitung 31 ist ein Druckluft-Beaufschlagungsraum 39 in dem Stellzylinder 32 mit Druckluft befüllbar. Durch Druckluftbeaufschlagung des Kolbens 34 wird die Rastierung des Rastelements 35 gelöst. Hierdurch wird die Rasteinrichtung 30 entriegelt. Durch die Rückstellfeder 38 wird das drehfest mit der Welle 36 verbundene Betätigungselement 9 dann in die Stellung Neutral gebracht. In der Stellung Neutral kann eine durch die elektronischen Steuereinrichtung 5 gesteuerte elektronische Niveauregelung des Fahrzeugaufbaus durchgeführt werden. Bei einer Betätigung des Betätigungselements 9 in eine der Stellungen Heben oder Senken wird vorteilhaft keine elektronische Niveauregelung durchgeführt.

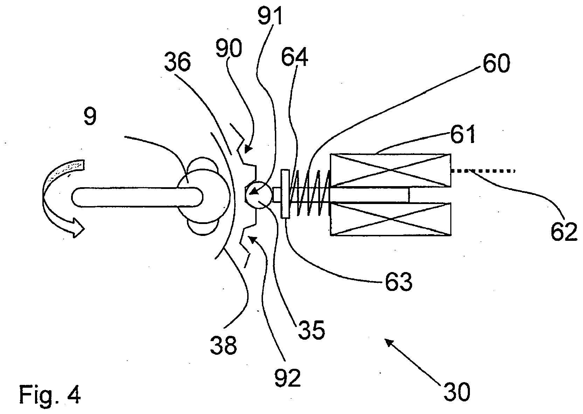

Die Fig. 4 zeigt beispielhaft eine Ausführung der Rasteinrichtung 30 mit einer elektromagnetisch betätigten Entriegelung. Wie bereits anhand der Fig. 3 erläutert, ist ebenfalls ein über eine Feder 60 beaufschlagtes Rastelement 35 vorgesehen, das in eine der drei Rastnuten 90, 91 oder 92 eingreift. Das Rastelement 35 wird über eine Stange 64 gegen die Welle 36 beaufschlagt. Die Stange 64 dient zugleich als Anker einer Elektromagnetanordnung, die als weitere Teile eine z.B. ringförmige Spule 61 und eine elektrische Anschlussleitung 62 zur elektrischen Beaufschlagung der Spule 61 aufweist. Die Stange 64 weist an ihrem dem Rastelement 35 zugewandten Ende einen Bund 64 auf. Die Feder 60 ist zwischen dem Bund 64 und der Spule 61 eingespannt. Hierdurch ist die Stange 64 in Richtung des Rastelements 35 vorgespannt. Bei einer elektrischen Beaufschlagung der Spule 61 wird die Stange 64 entgegen der Kraft der Feder 60 bewegt und gibt hierdurch die Rastierung des Betätigungselements 9 frei. Die Rasteinrichtung 30 ist dann entriegelt. Die elektrische Leitung 62 kann vorteilhaft mit der elektrischen Leitung verbunden sein, die den Elektromagneten 8 des Halte-Magnetventils 8, 22 mit der elektronischen Steuereinrichtung 5 verbindet. Auf diese Weise erfolgt eine automatische Entriegelung der Rasteinrichtung 30 auf elektromagnetischem Wege bei jeder elektrischen Betätigung des Halte-Magnetventils 8, 22.

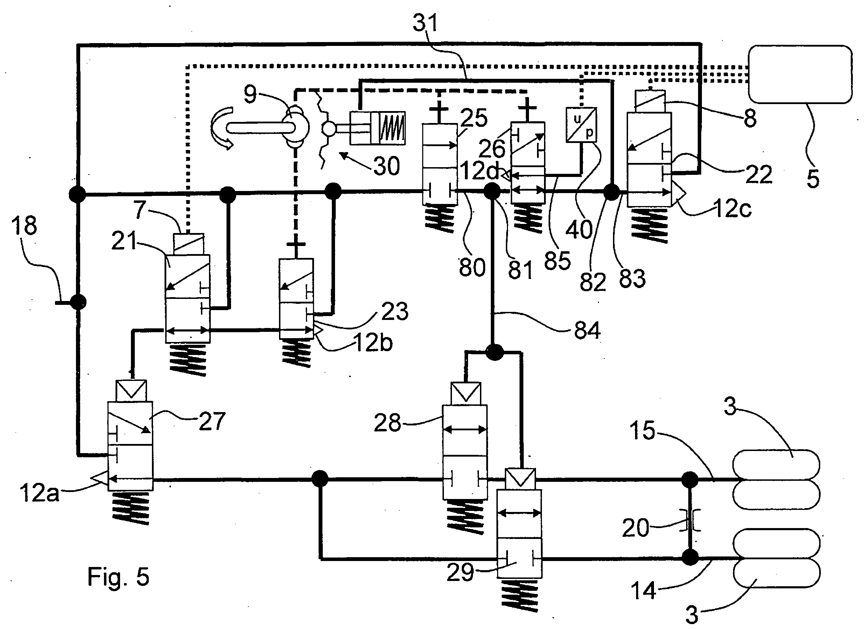

Die Fig. 5 zeigt eine weitere Ausführungsform der Ventileinrichtung 6. Im Unterschied zur Fig. 2 ist die Heben/Senken-Pneumatikventilanordnung hier als einzelnes 3/2-Wegeventil 23 ausgeführt. Zudem ist das weitere Auslassventil 26 der Halte-Pneumatikventilanordnung 25, 26 als 4/2-Wegeventil ausgebildet. An einen der zusätzlichen Druckluftanschlüsse des weiteren Auslassventils 26 ist über einen Druckluftpfad 85 ein Drucksensor 40 angeschlossen, der als Detektormittel zur Erkennung einer manuellen Betätigung des manuellen Betätigungselements 9 dient. Der Drucksensor 40 ist über eine elektrische Leitung mit der elektronischen Steuereinrichtung 5 verbunden. Bei einer Betätigung des manuellen Betätigungselements 9 wird das weitere Auslassventil 26 infolge der mechanischen Beaufschlagung in eine Schaltstellung gebracht, in der der Drucksensor 40 über das zugleich von dem Betätigungselement 9 betätigte weitere Einlassventil 25 mit dem Vorratsanschluss 18 und damit mit dem Vorratsdruck verbunden. Bei unbetätigtem Betätigungselement 9 ist der Drucksensor 40 über das weitere Auslassventil 26 mit einer Entlüftung 12d verbunden, die wiederum mit dem Entlüftungsanschluss 12 verbunden ist. Die elektronische Steuereinrichtung 5 wertet die Signale des Drucksensors 40 aus. Insbesondere erkennt die elektronische Steuereinrichtung 5 anhand der unterschiedlichen Signale, ob das manuelle Betätigungselement aus der Neutral-Stellung in die Heben- oder Senken-Stellung betätigt ist (am Drucksensor 40 steht Vorratsdruck an) oder unbetätigt in der Neutral-Stellung ist (am Drucksensor 40 steht Atmosphärendruck an).

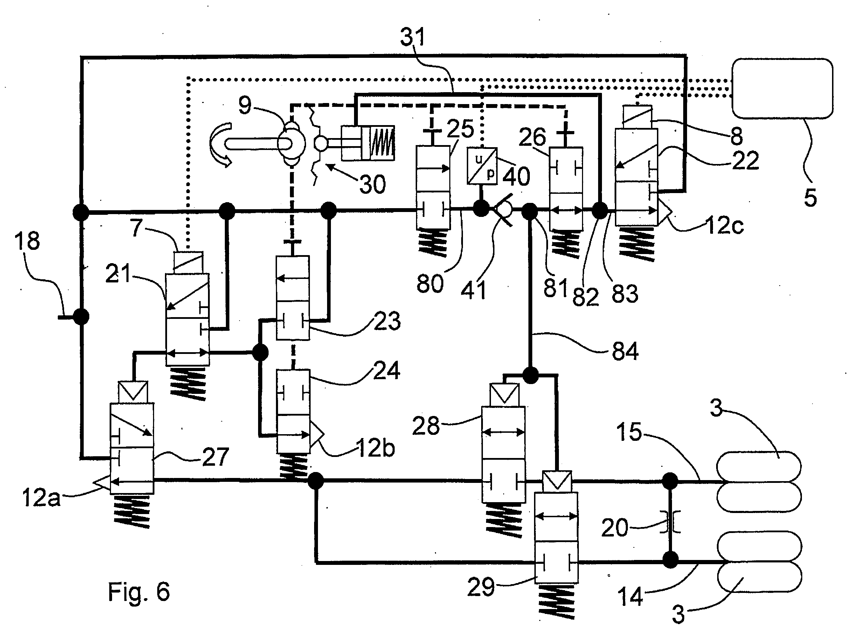

Eine weitere Ausführungsform der erfindungsgemäßen Ventileinrichtung ist in der Fig. 6 dargestellt. Von der Ausführungsform gemäß Fig. 2 unterscheidet sich die Ausführungsform gemäß Fig. 6 dadurch, dass ein Drucksensor 40 und ein Rückschlagventil 41 vorgesehen sind. Der Drucksensor 40 dient, ähnlich wie zuvor anhand der Fig. 5 erläutert, als Detektormittel zur Erkennung einer manuellen Betätigung des manuellen Betätigungselements 9. Der Drucksensor 40 ist hierfür mit pneumatisch an das weitere Einlassventil 25 angeschlossen. Hierdurch erkennt die Steuereinrichtung 5, ähnlich wie zuvor gemäß Fig. 5 beschrieben, anhand des infolge einer Betätigung des weiteren Einlassventils 25 anstehenden Vorratsdrucks, dass das Betätigungselement 9 entweder in der Stellung Heben oder in die Stellung Senken steht. Zur Entkopplung des Drucksensors 40 von einem durch das Halte-Magnetventil 8, 22 zu den Halteventilen 28, 29 eingesteuerten Vorratsdruck ist das Rückschlagventil 41 vorgesehen, das sich zwischen dem pneumatischen Anschluss des Drucksensors 40 bzw. dem weiteren Einlassventil 25 und dem von dem Halte-Magnetventil 8, 22 zu den pneumatischen Steuereingängen der Halteventile 28, 29 führenden Druckluftpfad 83 befindet.

Der Drucksensor 40 kann auch als preiswerter Druckschalter ausgebildet sein.

Vorteilhaft wird das Drucksignal zur Erkennung der Stellung des manuellen Betätigungselements 9 somit an einer Stelle abgezweigt, an der je nach manueller Betätigung große Druckdifferenzen vorliegen, nämlich Vorratsdruck und Atmosphärendruck. Das Rückschlagventil 41 hält dabei den von dem Halte-Magnetventil 8, 22 gegebenenfalls eingesteuerten Vorratsdruck zurück, so dass der Drucksensor 40 nicht hierdurch beeinflusst werden kann und ausschließlich den von dem weiteren Einlassventil 25 zugeführten Druck sensiert.

Die in der elektronischen Steuereinrichtung 5 vorgesehene Software-Funktion für die Steuerung der Ventileinrichtung 6 kann beispielsweise wie folgt arbeiten:
Über die Auswertung der Drehgeschwindigkeitssignale der Räder 4 wird erkannt, ob das Fahrzeug sich im Stillstand oder in Fahrt befindet. Beispielsweise kann bei Erreichen einer bestimmten Geschwindigkeitsschwelle der Zustand Fahrt erkannt werden. Bei Unterschreitung einer bestimmten Geschwindigkeitsschwelle kann der Zustand Stillstand erkannt werden. Sofern eine Ausführung der Ventileinrichtung gemäß Fig. 2 verwendet wird, bei der das Detektormittel 40 nicht vorgesehen ist, bestimmt die elektronische Steuereinrichtung 5 durch eine Plausibilitätsprüfung der von dem Wegsensor 10 und den Drucksensoren 11, 19 abgegebenen Signale, ob eine manuelle Betätigung des Betätigungselements 9 vorliegt. Sofern keine manuelle Betätigung des Betätigungselements 9 vorliegt, regelt die elektronische Steuereinrichtung 5 auch im Stillstand bei Bedarf die Niveaulage im Rahmen der automatischen Niveauregelung nach. Sobald die elektronische Steuereinrichtung 5 den Zustand Fahrt erkennt, stellt sie das Betätigungselement 9 in die Stellung Neutral zurück, indem eine kurze Betätigung des Elektromagneten 8 erfolgt. Hierdurch wird die Rasteinrichtung 30 entriegelt und das Betätigungselement 9 durch Federkraft in die Stellung Neutral gestellt. Alternativ ist möglich, dass die elektronische Steuereinrichtung 5 erst bei Regelungsbedarf der automatischen Niveauregelung, d.h. z.B. bei einer entsprechenden Abweichung einer ermittelten Ist-Niveaulage von einer Soll-Niveaulage, die automatische Niveauregelung mit einer Betätigung des Halte-Magnetventils 8, 22 beginnt. Hierdurch wird quasi automatisch die Rasteinrichtung 30 entriegelt und das Betätigungselement 9 durch Federkraft in die Stellung Neutral gestellt. Die elektronische Steuereinrichtung 5 beginnt mit der Niveauregelung in einer vorteilhaften Ausgestaltung der Erfindung erst nach einer vorbestimmten Wartezeit, die so bemessen ist, dass das Betätigungselement 9 unter normalen Umständen die Stellung Neutral erreicht hat.

Bei Verwendung des Detektormittels 40, z.B. gemäß den Ausführungsformen der Fig. 5 oder Fig. 6, kann die elektronische Steuereinrichtung 5 aufgrund des Signals des Detektorsmittels 40 eine manuelle Betätigung des Betätigungselements 9 erkennen. Bei erkannter Betätigung des Betätigungselements 9 in die Stellung Heben oder die Stellung Senken unterlässt die elektronische Steuereinrichtung 5 die automatische Niveauregelung, d.h. die Elektromagneten 7, 8 werden nicht elektrisch betätigt, solange das Detektormittel 40 eine Stellung des Betätigungselements 9 in die Stellung Heben oder Senken anzeigt. Erst wenn das Detektormittel 40 eine Betätigung des Betätigungselements 9 in die Stellung Neutral anzeigt, nimmt die elektronische Steuereinrichtung 5 die Funktion der automatischen Niveauregelung auch bei Stillstand des Fahrzeuges wieder auf. Vorteilhaft kann bei der Auswertung des Signals des Detektormittels und der Erkennung des Zustands Fahrt eine Priorisierung dahingehend vorgenommen werden, dass die elektronische Steuereinrichtung bei Erkennung des Zustands Fahrt auch dann wieder die automatische Niveauregelung aufnimmt, wenn das Detektormittel nicht die Stellung Neutral des Betätigungselements 9 anzeigt. Hierdurch kann eine erhöhte Betriebssicherheit der Niveauregelungsanlage erzielt werden, z.B. wenn ein Defekt an dem Detektormittel 40 vorliegt:

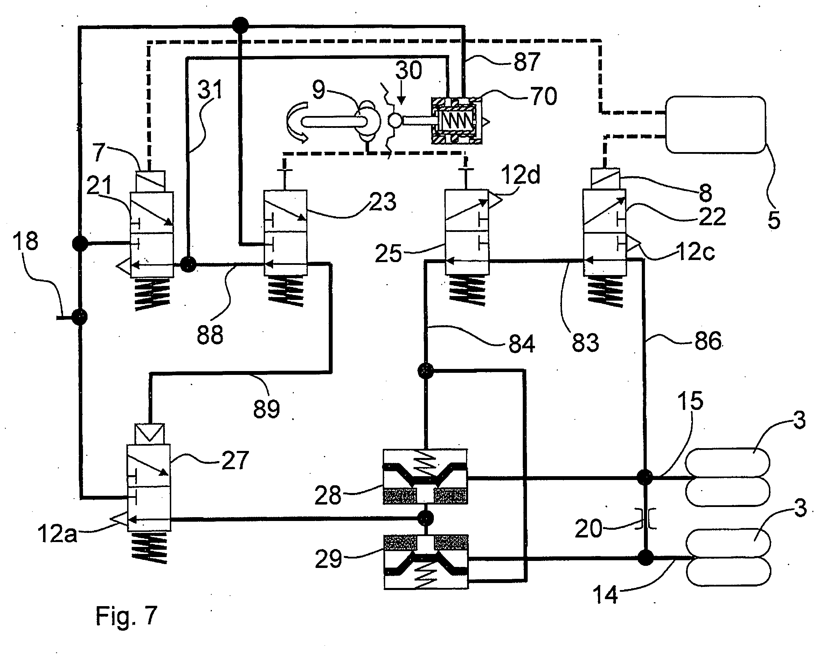

Die Figur 7 zeigt eine weitere Ausführungsform der erfindungsgemäßen Ventileinrichtung 6. In dieser Ausführungsform weist die Pneumatikventilanordnung ein Heben/Senken-Pneumatikventil 23 in Form eines 3/2-Wege-Ventils, das die Heben/Senken-Pneumatikventilanordnung bildet, und ein Halte-Pneumatikventil 25 in Form eines 3/2-Wege-Ventils, das die Halte-Pneumatikventilanordnung bildet, auf. Statt der z.B. anhand der Figur 2 erläuterten vier 2/2-Wege-Ventile der Pneumatikventilanordnung sind somit zwei 3/2-Wege-Ventile vorgesehen. In der Neutralstellung der Ventileinrichtung 6 befinden sich das Heben/Senken-Pneumatikventil 23 und das Halte-Pneumatikventil 25 in der federbelasteten Grundstellung, die in der Figur 7 eingenommen ist. In dieser Neutralstellung, die z.B. bei fahrendem Fahrzeug eingenommen wird, werden die Ventile 23, 25 somit durch Federkraft in ihrer Grundstellung gehalten und müssen nicht durch eine Nocke des manuellen Betätigungselements 9 betätigt sein. Dies hat den Vorteil, dass die Rückstellfeder 38, über die das manuelle Betätigungselement 9 in die Stellung Neutral stellbar ist, kleiner dimensioniert sein kann, da geringere Kräfte für die Rückstellung des Betätigungselements 9 erforderlich sind.

Im Unterschied zu der Ausführungsform der Fig. 2 sind bei der Ausführungsform gemäß Fig. 7 beide Ventile 23, 25 der Pneumatikventilanordnung sozusagen stromabwärts des ihnen jeweils vorgeschalteten Magnetventils 7, 21 bzw. 8, 22 angeordnet. Das Heben/Senken-Pneumatikventil 23 ist in einem Druckluftpfad 88, 89 zwischen dem Heben/Senken-Magnetventil 7, 21 und dem Heben/Senken-Ventil 27 angeordnet. Das Halte-Pneumatikventil 25 ist in einem Druckluftpfad 83, 84 zwischen dem Halte-Magnetventil 8, 22 und den Halteventilen 28, 29 angeordnet. Diese Anordnung hat beispielsweise den Vorteil, dass auch aus der Betätigung des Heben/Senken-Magnetventils 7, 21 ausgangsseitig an der Druckluftleitung 88 ein Drucksignal für die Entriegelung der Rasteinrichtung 30 entnommen und über eine Druckluftleitung 31 der Rasteinrichtung 30 zugeführt werden kann. Die Funktionsweise der dargestellten Ventile entspricht im Übrigen z.B. der Ausführungsform gemäß Fig. 2.

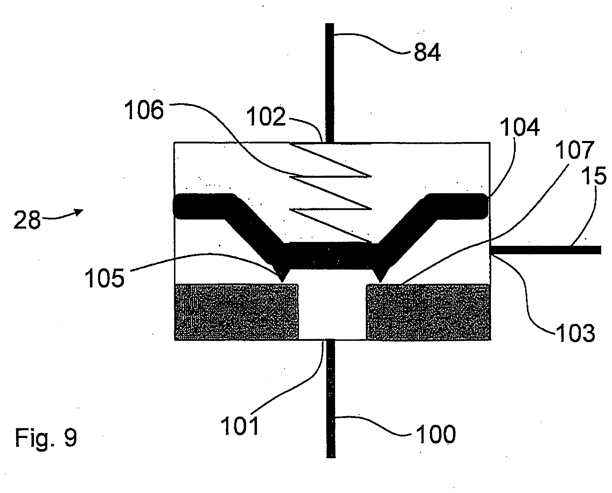

Gemäß Fig. 7 sind als Halteventile 28, 29 Membranventile vorgesehen. Membranventile haben beispielsweise gegenüber Sitzventilen den Vorteil, dass sie kostengünstiger herstellbar sind und weniger Bauteile aufweisen. Hierdurch sind Membranventile robuster und verschleißunempfindlicher. Der Aufbau der Membranventile 28, 29 ist in der Fig. 9 schematisch anhand des Membranventils 28 beispielhaft dargestellt. Wie in den Fig. 7 und 9 erkennbar ist, weisen die Membranventile 28, 29 jeweils einen Eingangsanschluss 101 auf, an den eine mit dem Heben/Senken-Ventil 27 verbundene Druckluftleitung 100 angeschlossen ist. Der Eingangsanschluss 101 ist mit einer Steuerfläche einer Membran 104 in dem jeweiligen Membranventil verbunden. Die Membran 104 weist als Ventilelement eine umlaufende Ringdichtung 105 auf, die um den Eingangsanschluss 101 herum verläuft und an einem Ventilsitz 107 anliegt. Die Membranventile 28, 29 sind über jeweilige Ausgangsanschlüsse 103 mit den zu den Luftfederbälgen 3 führenden Druckluftleitungen 14, 15 verbunden. Die Membranventile 28, 29 weisen zudem einen Steueranschluss 102 auf, wobei die beiden Steueranschlüsse der Membranventile 28, 29 über die Druckluftleitung 84 mit dem Halte-Pneumatikventil 25 verbunden sind. Über das Halte-Pneumatikventil 25 und das Halte-Magnetventil 8, 22 sind die Steuereingänge 102 der Membranventile 28, 29 wahlweise über eine Druckluftleitung 86 mit den Luftfederbälgen 3 oder über einen Entlüftungsanschluss 12c mit der Atmosphäre verbindbar. Die Membran 104 ist zudem über eine Druckfeder 106 in Schließrichtung des Membranventils leicht vorgespannt. Zum Sperren der Membranventile 28, 29 wird der jeweilige Steuereingang 102 der Membranventile mit Druckluft aus den Luftfederbälgen 3 beaufschlagt. Zum Öffnen der Membranventile 28, 29 wird der jeweilige Steuereingang 102 durch Verbindung mit dem Entlüftungsanschluss 12c des Haltemagnetventils 8, 22 entlüftet. Die Membranventile gehen dann, sofern von dem Heben/Senken-Ventil 27 Vorratsdruck ansteht, in die geöffnete Stellung und lassen einen Druckluftstrom von dem Vorratsanschluss 18 in die Luftfederbälge 3 zu.

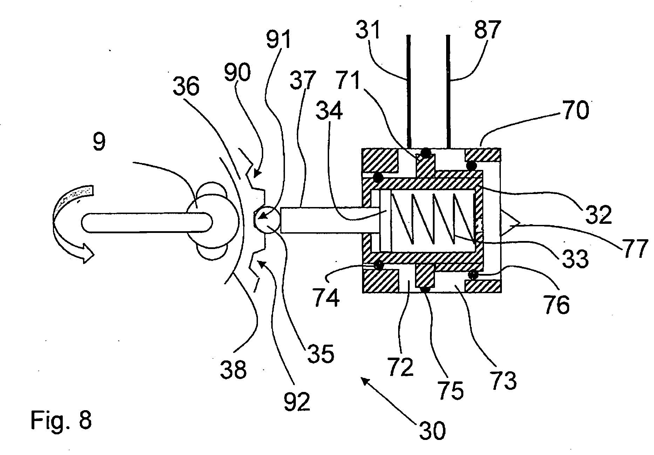

Die Fig. 7 zeigt zudem eine Rasteinrichtung 30 mit einer Kolben-Zylinder-Anordnung 70, die über zwei Druckluftleitungen 31, 87 mit Druckluft beaufschlagbar ist. Die Druckluftleitung 87 ist permanent mit dem Vorratsanschluss 18 verbunden. Die Druckluftleitung 31 ist mit der Druckluftleitung 88 verbunden. Über die Druckluftleitung 31 kann die Kolben-Zylinder-Anordnung 70 bei entsprechender Betätigung des Heben/Senken-Magnetventils 7, 21 mit Druckluft vom Vorratsanschluss 18 beaufschlagt werden. Die Funktion der Rasteinrichtung 30 mit der Kolben-Zylinder-Anordnung 70 wird anhand der Fig. 8 im Einzelnen beschrieben.

Die im Vergleich z.B. zu der Ausführungsform der Fig. 2 unterschiedlichen Elemente in der Ausführungsform gemäß Fig. 7 sind vorteilhaft mit den übrigen zuvor erläuterten Ausführungsformen der Ventileinrichtung 6 kombinierbar. So ist z.B. die Ausführungsform der Pneumatikventilanordnung in Form zweier 3/2-Wege-Ventile mit den übrigen Ausführungsformen der Ventileinrichtung 6 separat kombinierbar. Ebenso ist die Anordnung der Heben/Senken-Pneumatikventilanordnung 23 stromabwärts des Heben/Senken-Magnetventils 7, 21 mit den übrigen Ausführungsformen der Ventileinrichtung 6 separat kombinierbar. Gleichermaßen kann die Ausführungsform der Rasteinrichtung 30 mit der zwei Druckluftanschlüsse aufweisenden Kolben-Zylinder-Anordnung 70 separat mit den übrigen Ausführungsformen der Ventileinrichtung 6 kombiniert werden. Gleichermaßen ist es möglich, die Membranventile 28, 29 in den zuvor genannten Ausführungsformen der Ventileinrichtung 6 als Halteventile einzusetzen. Ebenso kann die Drucksteuerung der Halteventile 28, 29, wie anhand der Fig. 7 beschrieben, auch bei dem zuvor erläuterten Ausführungsformen der Ventileinrichtung 6 über den in den Luftfederbälgen 3 vorhandenen Druck, statt mit Vorratsdruck, erfolgen.

Die Fig. 8 zeigt den Aufbau der Kolben-Zylinder-Anordnung 70 im Einzelnen. In einem Zylinder 70 ist ein Kolben 71 verschieblich gelagert. Der Kolben 71 ist gegenüber dem Zylinder 70 über Dichtungsringe 74, 75, 76 abgedichtet. Zwischen den Dichtungsringen 74, 75 wird eine erste Druckluftkammer 72 gebildet, an die die Druckluftleitung 31 angeschlossen ist. Zwischen den Dichtringen 75, 76 wird eine zweite Druckluftkammer 73 gebildet, an die die Druckluftleitung 87 angeschlossen ist. Sofern nur die erste Druckluftkammer 72 mit Druckluft beaufschlagt ist, wird der Kolben 71 von den Rastnuten 90, 91, 92 fortbewegt, so dass die Rasteinrichtung 30 entriegelt ist. Sofern nur die zweite Druckluftkammer 73 mit Druckluft beaufschlagt ist, wird der Kolben 71 auf die Rastnuten 90, 91, 92 zu bewegt, so dass die Rasteinrichtung verriegelt ist. Die für die Verschiebung des Kolbens 71 in dem Zylinder 70 vorgesehenen Druckluft-Wirkflächen sind in den Druckluftkammern 72, 73 unterschiedlich groß ausgestaltet. Die seitens der ersten Druckluftkammer 72 vorgesehene Druckluft-Wirkfläche ist größer als die seitens der zweiten Druckluftkammer 73 vorgesehene Druckluft-Wirkfläche. Eine Druckbeaufschlagung beider Druckluftkammern 72, 73 mit gleicher Druckhöhe führt daher dazu, dass der Kolben 71 von den Rastnuten 90, 91, 92 fortbewegt ist und die Rasteinrichtung entriegelt ist.

In dem Kolben 71 befindet sich ein innerer, mit der Kraft einer Druckfeder 33 beaufschlagter Kolben 34, der innerhalb des Kolbens 71 längs beweglich, d.h. verschlieblich, ist. Der Kolben 34 wirkt über die Kolbenstange 37 auf das Rastelement 35 ein. Der innere Kolben 34 ist lediglich federkraftbeaufschlagt und nicht Druckluft-beaufschlagbar. Die Kammer innerhalb des Kolbens 71, in der die Feder 33 angeordnet ist, ist daher über eine in dem Kolben 71 vorgesehene Bohrung mit einem Entlüftungsanschluss 77 der Kolben-Zylinder-Anordnung verbunden. Der Entlüftungsanschluss 77 ist mit der Atmosphäre verbunden.

Über die Feder 33 erfolgt die Beaufschlagung des Rastelements 35 über die Kolbenstange 37 und den inneren Kolben 34 mit einer bestimmten Federkraft. Sofern beide Druckluftkammern 72, 73 mit Vorratsdruck beaufschlagt sind, ist die Rasteinrichtung 30 entriegelt, d.h. der Kolben 71 von den Rastnuten 90, 91, 92 fortbewegt. Sofern die Druckluftleitung 31 drucklos ist, aber über die Druckluftleitung 87 Vorratsdruck in die zweite Druckluftkammer 73 geführt ist, ist die Rasteinrichtung verriegelt, d.h. der Kolben 71 ist in seiner in Fig. 8 gezeigten Stellung, in der er auf die Rastnuten 90, 91, 92 zu bewegt ist. Sofern die Druckluftleitung 87 ebenfalls drucklos wird, z.B. infolge eines Eingreifens der Fahrzeughöhenbegrenzungseinrichtung, sind somit beide Druckluftkammern 72, 73 drucklos. In diesem Fall erfolgt eine automatische Entriegelung der Rasteinrichtung 30 infolge der Kraft der Feder 33, die den Kolben 71 von den Rastnuten 90, 91, 92 fortbewegt in die entriegelte Stellung. Die Felder 33 hat somit eine doppelte Funktion, nämlich einerseits eine abgefederte Beaufschlagung des Rastelements 35 in der verriegelten Position der Rasteinrichtung und andererseits eine automatische Entriegelung, wenn die erste Druckluftkammer 72 und die zweite Druckluftkammer 73 drucklos sind.

Die Feder 33 erlaubt zudem ein manuelles Überwinden der Rastwirkung der Rasteinrichtung, indem das manuelle Betätigungselement 9 in die gewünschte Richtung bewegt wird. Hierbei wird das Rastelement 35 über abgeschrägte Seitenflächen der Rastnuten 90, 91, 92 entgegen der Kraft der Feder 33 bewegt.

## Patentansprüche

1. Ventileinrichtung für eine Luftfederungsanlage in einem Fahrzeug,
(a) die Ventileinrichtung (6) weist wenigstens einen mit einem Luftfederbalg (3) der Luftfederungsanlage verbindbaren Balganschluss (14, 15), einen mit einem Druckluftvorrat verbindbaren Vorratsanschluss (18) und einen mit der Atmosphäre verbindbaren Entlüftungsanschluss (12) auf,
(b) die Ventileinrichtung (6) weist eine elektrische Betätigungsanordnung (7, 8, 21, 22) und ein manuelles Betätigungselement (9) auf,
(c) die Ventileinrichtung (6) weist eine pneumatisch betätigbare Arbeitsventilanordnung (27, 28, 29) auf, durch deren Betätigung der Balganschluss (14, 15) wahlweise mit dem Vorratsanschluss (18) oder dem Entlüftungsanschluss (12) verbindbar oder absperrbar ist,
(d) die Arbeitsventilanordnung (27, 28, 29) ist pneumatisch sowohl von der elektrischen Betätigungsanordnung (7, 8, 21, 22) als auch von einer über das manuelle Betätigungselement (9) betätigbaren Pneumatikventilanordnung (23, 24, 25, 26) betätigbar, **dadurch gekennzeichnet, dass**
(e) die Arbeitsventilanordnung (27, 28, 29) Balganschluss-seitig wenigstens ein Halteventil (28) und Vorratsanschluss-seitig ein pneumatisch zum Halteventil (28) in Reihe geschaltetes Heben/Senken-Ventil (27) aufweist, wobei durch Betätigung des Heben/Senken-Ventils (27) das Halteventil (28) wahlweise mit dem Vorratsanschluss (18) oder dem Entlüftungsanschluss (12) verbindbar ist und durch Betätigung des Halteventils (28) wahlweise ein Druckluftpfad zwischen dem Balganschluss (15) und dem Heben/Senken-Ventil (27) sperrbar oder auf Durchlass schaltbar ist.

2. Ventileinrichtung nach Anspruch 1, **gekennzeichnet durch** folgende Merkmale:
(a) die elektrische Betätigungsanordnung (7, 8, 21, 22) weist ein Heben/Senken-Magnetventil (7, 21) auf, **durch** das die Ventileinrichtung (6) derart betätigbar ist, dass der Balganschluss (14, 15) wahlweise mit dem Vorratsanschluss (18) oder dem Entlüftungsanschluss (12) verbunden ist,
(b) die elektrische Betätigungsanordnung (7, 8, 21, 22) weist ein Haltemagnetventil (8, 22) auf, **durch** das die Ventileinrichtung (6) derart betätigbar ist, dass der Balganschluss (14, 15) wahlweise abgesperrt oder nicht abgesperrt ist.

3. Ventileinrichtung nach Anspruch 2, **gekennzeichnet durch** folgende Merkmale:
(a) das Heben/Senken-Magnetventil (7, 21) ist in einem Druckluftpfad (50, 51) zwischen einem Teil (23, 24) der Pneumatikventilanordnung (23, 24, 25, 26) und einem Teil (27) der Arbeitsventilanordnung (27, 28, 29) angeordnet,
(b) ein Teil (26) der Pneumatikventilanordnung (23, 24, 25, 26) ist in einem Druckluftpfad (80, 83, 84) zwischen dem Haltemagnetventil (8, 22) und einem Teil (28, 29) der Arbeitsventilanordnung (27, 28, 29) angeordnet.

4. Ventileinrichtung nach Anspruch 2, **gekennzeichnet durch** folgende Merkmale:
(a) ein Teil (23) der Pneumatikventilanordnung (23, 24, 25, 26) ist in einem Druckluftpfad (88, 89) zwischen dem Heben/Senken-Magnetventil (7, 21) und einem Teil (27) der Arbeitsventilanordnung (27, 28, 29) angeordnet,
(b) ein Teil (25) der Pneumatikventilanordnung (23, 24, 25, 26) ist in einem Druckluftpfad (83, 84) zwischen dem Haltemagnetventil (8, 22) und einem Teil (28, 29) der Arbeitsventilanordnung (27, 28, 29) angeordnet.

5. Ventileinrichtung nach wenigstens einem der vorhergehenden Ansprüche, **dadurch gekennzeichnet, dass** das manuelle Betätigungselement (9) um eine Drehachse in die Schaltstellungen Heben, Senken und Neutral betätigbar ist, wobei bei unbetätigter elektrischer Betätigungsanordnung (7, 8, 21, 22) in der Schaltstellung Heben der Balganschluss (14, 15) mit dem Vorratsanschluss (18) verbunden ist, in der Schaltstellung Senken der Balganschluss (14, 15) mit dem Entlüftungsanschluss (12) verbunden ist und in der Schaltstellung Neutral der Balganschluss (14, 15) abgesperrt ist.

6. Ventileinrichtung nach wenigstens einem der vorhergehenden Ansprüche, **dadurch gekennzeichnet, dass** das manuelle Betätigungselement (9) über eine entriegelbare Rasteinrichtung (30) in wenigstens einer Stellung verrastbar ist und die entriegelbare Rasteinrichtung (30) durch Betätigung wenigstens eines Teils der elektrischen Betätigungsanordnung (7, 8, 21, 22) entriegelbar ist.

7. Ventileinrichtung nach Anspruch 6, **dadurch gekennzeichnet, dass** die Rasteinrichtung (30) durch elektrische oder pneumatische Beaufschlagung der Rasteinrichtung (30) entriegelbar ist.

8. Ventileinrichtung nach wenigstens einem der Ansprüche 6 bis 7, **dadurch gekennzeichnet, dass** das manuelle Betätigungselement (9) infolge einer Entriegelung der Rasteinrichtung (30) in die Stellung Neutral stellbar ist.

9. Ventileinrichtung nach wenigstens einem der Ansprüche 6 bis 8, **dadurch gekennzeichnet, dass** die Rasteinrichtung (30) durch Betätigung des Heben/Senken-Magnetventil (7, 21) und/oder durch Betätigung des Haltemagnetventils (8, 22) entriegelbar ist.

10. Ventileinrichtung nach wenigstens einem der Ansprüche 5 bis 9, **dadurch gekennzeichnet, dass** das manuelle Betätigungselement (9) durch eine Rückstellfeder (38) in die Stellung Neutral stellbar ist.

11. Ventileinrichtung nach wenigstens einem der vorhergehenden Ansprüche, **dadurch gekennzeichnet, dass** ein weiteres Halteventil (29) einerseits mit einem weiteren mit einem Luftfederbalg (3) der Luftfederungsanlage verbindbaren Balganschluss (14) der Ventileinrichtung (6) und andererseits mit dem Heben/Senken-Ventil (27) verbunden ist, wobei durch Betätigung des weiteren Halteventils (29) wahlweise ein Druckluftpfad zwischen dem weiteren Balganschluss (14) und dem Heben/Senken-Ventil (27) sperrbar oder auf Durchlass schaltbar ist.

12. Ventileinrichtung nach wenigstens einem der vorhergehenden Ansprüche, **dadurch gekennzeichnet, dass** das Halteventil (28) und/oder das weitere Halteventil (29) als Membranventil ausgeführt ist.

13. Ventileinrichtung nach wenigstens einem der vorhergehenden Ansprüche, **dadurch gekennzeichnet, dass** ein pneumatischer Betätigungsanschluss des Halteventils (28) und/oder des weiteren Halteventils (29) zu deren Betätigung mit dem Balganschluss (14, 15) verbindbar ist.

14. Ventileinrichtung nach wenigstens einem der vorhergehenden Ansprüche, **dadurch gekennzeichnet, dass** ein Detektormittel (40) zur Erkennung einer manuellen Betätigung des manuellen Betätigungselements (9) vorgesehen ist.

15. Ventileinrichtung nach wenigstens einem der vorhergehenden Ansprüche, **dadurch gekennzeichnet, dass** die Pneumatikventilanordnung (23, 24, 25, 26) eine Halte-Pneumatikventilanordnung (25, 26) und eine Heben/Senken-Pneumatikventilanordnung (23, 24) aufweist, wobei die Ventileinrichtung (6) durch die Halte-Pneumatikventilanordnung (25, 26) derart betätigbar ist, dass der Balganschluss (14, 15) abgesperrt oder nicht abgesperrt ist, und die Ventileinrichtung (6) durch die Heben/Senken-Pneumatikventilanordnung (23, 24) derart betätigbar ist, dass der Balganschluss (14, 15) wahlweise mit dem Vorratsanschluss (18) oder dem Entlüftungsanschluss (12) verbunden ist.

16. Ventileinrichtung nach Anspruch 15, **dadurch gekennzeichnet, dass** die Halte-Pneumatikventilanordnung (25, 26) in einem Druckluftpfad zwischen dem Haltemagnetventil (8, 22) und dem Halteventil bzw. den Halteventilen (28, 29) angeordnet ist.

17. Ventileinrichtung nach Anspruch 15 oder 16, **dadurch gekennzeichnet, dass** das Heben/Senken-Magnetventil (7, 21) in einem Druckluftpfad zwischen der Heben/Senken-Pneumatikventilanordnung (23, 24) und dem Heben/Senken-Ventil (27) vorgesehen ist.

18. Ventileinrichtung nach wenigstens einem der Ansprüche 15 bis 17, **dadurch gekennzeichnet, dass** die Rasteinrichtung (30) über einen von einem Druckluftpfad (87) zwischen dem Heben/Senken-Magnetventil (7, 21) und der Heben/Senken-Pneumatikventilanordnung (23, 24) abgezweigten Druck pneumatisch entriegelbar ist.

19. Ventileinrichtung nach wenigstens einem der Ansprüche 15 bis 18, **dadurch gekennzeichnet, dass** die Rasteinrichtung (30) über einen von einem Druckluftpfad (83) zwischen dem Halte-Magnetventil (8, 22) und der Halte-Pneumatikventilanordnung (25, 26) abgezweigten Druck pneumatisch entriegelbar ist.

20. Ventileinrichtung nach wenigstens einem der Ansprüche 6 bis 19, **dadurch gekennzeichnet, dass** die Rasteinrichtung (30) infolge fehlenden oder verminderten Drucks am Vorratsanschluss (18) entriegelbar ist.

21. Ventileinrichtung nach wenigstens einem der Ansprüche 6 bis 20, **dadurch gekennzeichnet, dass** die Rasteinrichtung (30) einen in einem Zylinder (70) verschieblichen, druckluftbeaufschlagbaren Kolben (71) aufweist.

22. Ventileinrichtung nach Anspruch 21, **dadurch gekennzeichnet, dass** die Rasteinrichtung (30) eine erste Druckluftkammer (72) auf der einen Kolbenseite und eine zweite Druckluftkammer (73) auf der der ersten Druckluftkammer gegenüberliegenden Kolbenseite aufweist.

23. Ventileinrichtung nach Anspruch 21 oder 22, **dadurch gekennzeichnet, dass** die Rasteinrichtung (30) ein gegenüber dem Kolben (71) verschieblich und gefedert angeordnetes Rastbetätigungselement (34, 37) aufweist, über das das manuelle Betätigungselement (9) in wenigstens einer Stellung verrastbar ist.

24. Elektronische Steuereinrichtung (5) mit einem Mikroprozessor und einem Programmspeicher, in dem ein Steuerprogramm gespeichert ist, wobei die elektronische Steuereinrichtung (5) zur Steuerung einer Luftfederungsanlage in einem Fahrzeug mittels einer Ventileinrichtung (6) nach wenigstens einem der vorhergehenden Ansprüche eingerichtet ist.

25. Verfahren zur Steuerung einer Luftfederungsanlage in einem Fahrzeug mittels einer Ventileinrichtung (6) nach wenigstens einem der Ansprüche 6 bis 23, **gekennzeichnet durch** folgende Schritte:
a) Es wird von einer elektronischen Steuereinrichtung (5) laufend überwacht, ob sich das Fahrzeug im Fahrtzustand befindet,
b) bei Erkennung des Fahrtzustandes betätigt die elektronische Steuereinrichtung (5) wenigstens einen Teil der elektrischen Betätigungsanordnung (7, 8, 21, 22) der Ventileinrichtung (6) zur Entriegelung der Rasteinrichtung (30).

## Claims

1. Valve device for an air suspension system in a vehicle,
(a) the valve device (6) has at least one cushion connection (14, 15) connectable to a pneumatic spring cushion (3) of the air suspension system, a reserve connection (18) connectable to a compressed-air reserve, and a venting connection (12) connectable to the atmosphere,
(b) the valve device (6) has an electrical actuation arrangement (7, 8, 21, 22) and a manual actuation element (9),
(c) the valve device (6) has a pneumatically actuable working valve arrangement (27, 28, 29), as a result of the actuation of which the cushion connection (14, 15) can be selectively connected to the reserve connection (18) or to the venting connection (12) or shut off,
(d) the working valve arrangement (27, 28, 29) can be actuated pneumatically both by the electrical actuation arrangement (7, 8, 21, 22) and by a pneumatic valve arrangement (23, 24, 25, 26) actuable via the manual actuation element (9),
**characterized in that**
(e) the working valve arrangement (27, 28, 29) has on the cushion connection side at least one holding valve (28) and on the reserve connection side a raising/lowering valve (27) connected pneumatically in series to the holding valve (28), by the actuation of the raising/lowering valve (27) the holding valve (28) being connectable selectively to the reserve connection (18) or to the venting connection (12), and by the actuation of the holding valve (28) a compressed-air path between the cushion connection (15) and the raising/lowering valve (27) being capable selectively of being shut off or of being switched to passage.

2. Valve device according to Claim 1, **characterized by** the following features:
(a) the electrical actuation arrangement (7, 8, 21, 22) has a raising/lowering solenoid valve (7, 21), by means of which the valve device (6) can be actuated in such a way that the cushion connection (14, 15) is connected selectively to the reserve connection (18) or to the venting connection (12),
(b) the electrical actuation arrangement (7, 8, 21, 22) has a holding solenoid valve (8, 22), by means of which the valve device (6) can be actuated in such a way that the cushion connection (14, 15) is selectively shut off or not shut off.

3. Valve device according to Claim 2, **characterized by** the following features:
(a) the raising/lowering solenoid valve (7, 21) is arranged in a compressed-air path (50, 51) between part (23, 24) of the pneumatic valve arrangement (23, 24, 25, 26) and part (27) of the working valve arrangement (27, 28, 29),
(b) part (26) of the pneumatic valve arrangement (23, 24, 25, 26) is arranged in a compressed-air path (80, 83, 84) between the holding solenoid valve (8, 22) and part (28, 29) of the working valve arrangement (27, 28, 29).

4. Valve device according to Claim 2, **characterized by** the following features:
(a) part (23) of the pneumatic valve arrangement (23, 24, 25, 26) is arranged in a compressed-air path (88, 89) between the raising/lowering solenoid valve (7, 21) and part (27) of the working valve arrangement (27, 28, 29),
(b) part (25) of the pneumatic valve arrangement (23, 24, 25, 26) is arranged in a compressed-air path (83, 84) between the holding solenoid valve (8, 22) and part (28, 29) of the working valve arrangement (27, 28, 29).

5. Valve device according to at least one of the preceding claims, **characterized in that** the manual actuation element (9) can be actuated into the raising, lowering and neutral switching positions about an axis of rotation, and, with the electrical actuation arrangement (7, 8, 21, 22) being non-actuated, the cushion connection (14, 15) is connected to the reserve connection (18) in the raising switching position, the cushion connection (14, 15) is connected to the venting connection (12) in the lowering switching position and the cushion connection (14, 15) is shut off in the neutral switching position.

6. Valve device according to at least one of the preceding claims, **characterized in that** the manual actuation element (9) can be latched in at least one position via an unlockable latching device (30), and the unlockable latching device (30) can be unlocked by the actuation of at least one part of the electrical actuation arrangement (7, 8, 21, 22).

7. Valve device according to Claim 6, **characterized in that** the latching device (30) can be unlocked by electrical or pneumatic action upon the latching device (30).

8. Valve device according to at least one of Claims 6 to 7, **characterized in that** the manual actuation element (9) can be placed into the neutral position as a result of unlocking of the latching device (30).

9. Valve device according to at least one of Claims 6 to 8, **characterized in that** the latching device (30) can be unlocked by the actuation of the raising/lowering solenoid valve (7, 21) and/or by the actuation of the holding solenoid valve (8, 22).

10. Valve device according to at least one of Claims 5 to 9, **characterized in that** the manual actuation element (9) can be placed into the neutral position by a restoring spring (38).

11. Valve device according to at least one of the preceding claims, **characterized in that** a further holding valve (29) is connected, on the one hand, to a further cushion connection (14), connectable to a pneumatic spring cushion (3) of the air suspension system, of the valve device (6) and, on the other hand, to the raising/lowering valve (27), a compressed-air path between the further cushion connection (14) and the raising/lowering valve (27) being capable selectively of being shut off or of being switched to passage as a result of the actuation of the further holding valve (29).

12. Valve device according to at least one of the preceding claims, **characterized in that** the holding valve (28) and/or the further holding valve (29) are/is designed as a diaphragm valve.

13. Valve device according to at least one of the preceding claims, **characterized in that** a pneumatic actuation connection of the holding valve (28) and/or of the further holding valve (29) can be connected to the cushion connection (14, 15) for their actuation.

14. Valve device according to at least one of the preceding claims, **characterized in that** a detector means (40) is provided for detecting manual actuation of the manual actuation element (9).

15. Valve device according to at least one of the preceding claims, **characterized in that** the pneumatic valve arrangement (23, 24, 25, 26) has a holding pneumatic valve arrangement (25, 26) and a raising/lowering pneumatic valve arrangement (23, 24), the valve device (6) being actuable by the holding pneumatic valve arrangement (25, 26) in such a way that the cushion connection (14, 15) is shut off or not shut off, and the valve device (6) being actuable by the raising/lowering pneumatic valve arrangement (23, 24) in such a way that the cushion connection (14, 15) is connected selectively to the reserve connection (18) or to the venting connection (12).

16. Valve device according to Claim 15, **characterized in that** the holding pneumatic valve arrangement (25, 26) is arranged in a compressed-air path between the holding solenoid valve (8, 22) and the holding valve or holding valves (28, 29).

17. Valve device according to Claim 15 or 16, **characterized in that** the raising/lowering solenoid valve (7, 21) is provided in a compressed-air path between the raising/lowering pneumatic valve arrangement (23, 24) and the raising/lowering valve (27).

18. Valve device according to at least one of Claims 15 to 17, **characterized in that** the latching device (30) can be unlocked pneumatically via a pressure branched off from a compressed-air path (87) between the raising/lowering solenoid valve (7, 21) and the raising/lowering pneumatic valve arrangement (23, 24).

19. Valve device according to at least one of Claims 15 to 18, **characterized in that** the latching device (30) can be unlocked pneumatically via a pressure branched off from a compressed-air path (83) between the holding solenoid valve (8, 22) and the holding pneumatic valve arrangement (25, 26).

20. Valve device according to at least one of Claims 6 to 19, **characterized in that** the latching device (30) can be unlocked as a result of absent or reduced pressure at the reserve connection (18).

21. Valve device according to at least one of Claims 6 to 20, **characterized in that** the latching device (30) has a compressed-air-loadable piston (71) displaceable in a cylinder (70).

22. Valve device according to Claim 21, **characterized in that** the latching device (30) has a first compressed-air chamber (72) on one piston side and a second compressed-air chamber (73) on the piston side lying opposite the first compressed-air chamber.

23. Valve device according to Claim 21 or 22, **characterized in that** the latching device (30) has a latching actuation element (34, 37) which is arranged displaceably with respect to the piston (71) and in a sprung manner and via which the manual actuation element (9) can be latched in at least one position.

24. Electronic control device (5) with a microprocessor and with a program memory in which a control program is stored, the electronic control device (5) being set up for controlling an air suspension system in a vehicle by means of a valve device (6) according to at least one of the preceding claims.

25. Method for controlling an air suspension system in a vehicle by means of a valve device (6) according to at least one of Claims 6 to 23, **characterized by** the following steps:
(a) an electronic control device (5) continuously monitors whether the vehicle is in the drive state,
(b) when the drive state is detected, the electronic control device (5) actuates at least one part of the electrical actuation arrangement (7, 8, 21, 22) of the valve device (6) in order to unlock the latching device (30).

## Revendications

1. Dispositif de soupape pour installation d'amortissement pneumatique d'un véhicule, dans lequel
(a) le dispositif de soupape (6) présente au moins un raccord (14, 15) de soufflet apte à être raccordé à un soufflet (3) d'amortisseur pneumatique de l'installation d'amortissement pneumatique, un raccord (18) de réserve apte à être raccordé à une réserve d'air comprimé et un raccord d'évent (12) apte à être relié à l'atmosphère,
(b) le dispositif de soupape (6) présente un système (7, 8, 21, 22) d'actionnement électrique et un élément (9) d'actionnement manuel,
(c) le dispositif de soupape (6) présente un système (27, 28, 29) de soupape de travail apte à être actionné pneumatiquement et dont l'actionnement permet de raccorder ou de séparer le raccord de soufflet (14, 15) sélectivement au raccord de réserve (18) ou au raccord d'évent (12),
(d) le système (27, 28, 29) de soupape de travail peut être actionné pneumatiquement à la fois par le système (7, 8, 21, 22) d'actionnement électrique et par le système (23, 24, 25, 26) de soupape pneumatique apte à être actionné par l'élément (9) d'actionnement manuel,
**caractérisé en ce que**
(e) le système (27, 28, 29) de soupape de travail présente du côté du raccord de soufflet au moins une soupape de retenue (28) et du côté du raccord de réserve une soupape de relèvement/abaissement (27) raccordée pneumatiquement en série à la soupape de retenue (28),
**en ce que** l'actionnement de la soupape de relèvement/abaissement (27) permet de raccorder sélectivement la soupape de retenue (28) au raccord de réserve (18) ou au raccord d'évent (12) et
**en ce que** l'actionnement de la soupape de retenue (28) permet sélectivement de bloquer ou de commuter en passage un parcours d'air comprimé entre le raccord de soufflet (15) et la soupape de relèvement/abaissement (27).

2. Dispositif de soupape selon la revendication 1, **caractérisé par** les caractéristiques suivantes :
(a) le système (7, 8, 21, 22) d'actionnement électrique présente une soupape magnétique de relèvement/abaissement (7, 21) par laquelle le dispositif de soupape (6) peut être actionné de manière à raccorder le raccord de soufflet (14, 15) sélectivement au raccord de réserve (18) ou au raccord d'évent (12),
(b) le système (7, 8, 21, 22) d'actionnement électrique présente une soupape magnétique de retenue (8, 22) par laquelle le dispositif de soupape (6) peut être actionné de manière à bloquer ou débloquer sélectivement le raccorde de soufflet (14, 15).

3. Dispositif de soupape selon la revendication 2, **caractérisé par** les caractéristiques suivantes :
(a) la soupape magnétique de relèvement/abaissement (7, 21) est disposée dans un parcours (50, 51) d'air comprimé qui raccorde une partie (23, 24) du système (23, 24, 25, 26) de soupape pneumatique et à une partie (27) du système de travail (27, 28, 29) et
(b) une partie (26) du système (23, 24, 25, 26) de soupape pneumatique est disposée dans un parcours (80, 83, 84) d'air comprimé qui relie la soupape magnétique de retenue (8, 22) et une partie (28, 29) du système (27, 28, 29) de soupape de travail.

4. Dispositif de soupape selon la revendication 2, **caractérisé par** les caractéristiques suivantes :
(a) une partie (23) du système (23, 24, 25, 26) de soupape pneumatique est disposée dans un parcours (88, 89) d'air comprimé qui relie la soupape magnétique de relèvement/abaissement (7, 21) et une partie (27) du système (27, 28, 29) de soupape de travail et
(b) une partie (25) du système (23, 24, 25, 26) de soupape pneumatique est disposée dans un parcours (83, 84) d'air comprimé qui relie la soupape magnétique de retenue (8, 22) et une partie (28, 29) du système (27, 28, 29) de soupape de travail.

5. Dispositif de soupape selon au moins l'une des revendications précédentes, **caractérisé en ce que** l'élément d'actionnement manuel (9) peut être amené autour d'un axe de rotation dans les positions de commutation relèvement/abaissement et neutre, le raccord de soufflet (14, 15) étant relié au raccord de réserve (18) lorsque le système électrique d'actionnement (7, 8, 21, 22) non actionné est en position de commutation relèvement, le raccord de soufflet (14, 15) étant raccordé au raccord d'évent (12) lorsque le raccord de soufflet (14, 15) est en position de commutation abaissement et le raccord de soufflet (14, 15) étant bloqué en position de commutation neutre.

6. Dispositif de soupape selon au moins l'une des revendications précédentes, **caractérisé en ce que** l'élément d'actionnement manuel (9) peut être encliqueté en au moins une position par un dispositif d'encliquetage (30) déverrouillable et **en ce que** le dispositif d'encliquetage (30) déverrouillable peut être déverrouillé par actionnement d'au moins une partie du système électrique d'actionnement (7, 8, 21, 22).

7. Dispositif de soupape selon la revendication 6, **caractérisé en ce que** le dispositif d'encliquetage (30) peut être déverrouillé en intervenant électriquement ou pneumatiquement sur le dispositif d'encliquetage (30).

8. Dispositif de soupape selon au moins l'une des revendications 6 et 7, **caractérisé en ce que** l'élément d'actionnement manuel (9) peut être amené dans la position neutre par déverrouillage du dispositif d'encliquetage (30).

9. Dispositif de soupape selon au moins l'une des revendications 6 à 8, **caractérisé en ce que** le dispositif d'encliquetage (30) peut être déverrouillé par actionnement de la soupape magnétique de relèvement/abaissement (7, 21) et/ou par actionnement de la soupape magnétique de maintien (8, 22).

10. Dispositif de soupape selon au moins l'une des revendications 5 à 9, **caractérisé en ce que** l'élément manuel d'actionnement (9) peut être amené dans la position neutre par un ressort de rappel (38).

11. Dispositif de soupape selon au moins l'une des revendications précédentes, **caractérisé en ce qu'**une autre soupape de maintien (29) est reliée d'une part à un autre raccord de soufflet (14) du dispositif de soupape (6), qui peut être relié au soufflet (3) d'amortisseur pneumatique de l'installation d'amortissement pneumatique et d'autre part à la soupape de relèvement/abaissement (27), l'actionnement de l'autre soupape de maintien (29) permettant de commuter sélectivement en blocage ou en passage un parcours d'air comprimé entre l'autre raccord de soufflet (14) et la soupape de relèvement/abaissement (27).

12. Dispositif de soupape selon au moins l'une des revendications précédentes, **caractérisé en ce que** la soupape de maintien (28) et/ou l'autre soupape de maintien (29) sont configurés sous la forme de soupapes à membrane.

13. Dispositif de soupape selon au moins l'une des revendications précédentes, **caractérisé en ce qu'**un raccord pneumatique d'actionnement de la soupape de maintien (28) et/ou de l'autre soupape de maintien (29) peut être raccordé au raccord de soufflet (14, 15) pour être actionné.

14. Dispositif de soupape selon au moins l'une des revendications précédentes, **caractérisé en ce qu'**un moyen de détection (40) qui détecte un actionnement manuel de l'élément d'actionnement manuel (9) est prévu.

15. Dispositif de soupape selon au moins l'une des revendications précédentes, **caractérisé en ce que** le système (23, 24, 25, 26) de soupape pneumatique présente un système (25, 26) de soupape pneumatique de maintien et un système (23, 24) de soupape pneumatique de relèvement/abaissement, le dispositif de soupape (6) pouvant être actionné par le système (25, 26) de soupape pneumatique de maintien de manière à bloquer ou à débloquer le raccord de soufflet (14, 15) et le dispositif de soupape (6) pouvant être actionné par le système (23, 24) de soupape pneumatique de relèvement/abaissement de manière à raccorder sélectivement le raccord de soufflet (14, 15) au raccord de réserve (28) ou au raccord d'évent (12).

16. Dispositif de soupape selon la revendication 15, **caractérisé en ce que** le système (25, 26) de soupape pneumatique de maintien est disposé dans un parcours d'air comprimé qui relie la soupape magnétique de maintien (8, 22) et la ou les soupapes de maintien (28, 29).

17. Dispositif de soupape selon les revendications 15 ou 16, **caractérisé en ce que** la soupape magnétique de relèvement/abaissement (7, 21) est prévue dans un parcours d'air comprimé qui relie le système (23, 24) de soupape pneumatique de relèvement/abaissement et la soupape de relèvement/abaissement (27).

18. Dispositif de soupape selon au moins l'une des revendications 15 à 17, **caractérisé en ce que** le dispositif d'encliquetage (30) peut être déverrouillé pneumatiquement par l'intermédiaire d'une pression prélevée sur un parcours (87) d'air comprimé qui relie la soupape magnétique de leur relèvement/abaissement (7, 21) et le système (23, 24) de soupape pneumatique de relèvement/abaissement.

19. Dispositif de soupape selon au moins l'une des revendications 15 à 18, **caractérisé en ce que** le dispositif d'encliquetage (30) peut être déverrouillé pneumatiquement par l'intermédiaire d'une pression prélevée sur le parcours (83) d'air comprimé qui relie la soupape magnétique de maintien (8, 22) et le système (25, 26) de soupape pneumatique de maintien.

20. Dispositif de soupape selon au moins l'une des revendications 6 à 19, **caractérisé en ce que** le dispositif d'encliquetage (30) peut être déverrouillé par une pression absente ou diminuée au niveau du raccord de réserve (18).

21. Dispositif de soupape selon au moins l'une des revendications 6 à 20, **caractérisé en ce que** le dispositif d'encliquetage (30) présente un piston (71) sur lequel une pression peut être appliquée et coulissant dans un cylindre (70).

22. Dispositif de soupape selon la revendication 21, **caractérisé en ce que** le dispositif d'encliquetage présente une première chambre (72) à air comprimé sur un côté piston et une deuxième chambre (73) à air comprimé sur le côté du piston opposé à la première chambre à air comprimé.

23. Dispositif de soupape selon les revendications 21 ou 22, **caractérisé en ce que** le dispositif d'encliquetage (30) présente un élément (34, 37) d'actionnement d'encliquetage soutenu élastiquement et disposé à coulissement par rapport au piston (71), et par lequel l'élément manuel d'actionnement (9) peut être encliqueté en au moins une position.

24. Dispositif de commande électronique (5) présente un microprocesseur et une mémoire à programme dans laquelle un programme de commande est conservé, le dispositif de commande électronique (5) étant conçu pour commander une installation d'amortissement pneumatique d'un véhicule au moyen d'un dispositif de soupape (6) selon au moins l'une des revendications précédentes.

25. Procédé de commande d'une installation d'amortissement pneumatique d'un véhicule au moyen d'un dispositif de soupape (6) selon au moins l'une des revendications 6 à 23, le procédé étant **caractérisé par** les étapes suivantes :
a) le dispositif de commande électronique (5) surveille en permanence si le véhicule est en déplacement et
b) lorsqu'une situation de déplacement est détectée, le dispositif électronique de commande (5) actionne au moins une partie du système électrique d'actionnement (7, 8, 21, 22) du dispositif de soupape (6) de manière à déverrouiller le dispositif d'encliquetage (30).
